# EUROPEAN PATENT SPECIFICATION

(11) **EP 1 570 388 B1**
(45) Date of publication and mention of the grant of the patent: **30.01.2008**
(21) Application number: 03780169.3
(22) Date of filing: 16.10.2003
(51) Int. Cl.: G06F 17/50, B61L 27/00, G05B 17/02

(54) **DEVICE AND METHOD FOR CHECKING RAILWAY LOGICAL SOFTWARE ENGINES FOR COMMANDING PLANTS, PARTICULARLY STATION PLANTS**
EINRICHTUNG UND VERFAHREN ZUR PRÜFUNG VON LOGISCHEN EISENBAHN-SOFTWARE-ENGINES FÜR KOMMANDOANLAGEN INSBESONDERE STATIONSANLAGEN
DISPOSITIF ET PROCEDE DE VERIFICATION DES MOTEURS LOGICIELS DE CHEMIN DE FER PERMETTANT DE COMMANDER DES INSTALLATIONS TELLES QUE DES GARES

(30) Priority: 14.11.2002 IT SV20020056
(43) Date of publication of application: 07.09.2005
(73) Proprietor: ALSTOM FERROVIARIA S.P.A., 12038 Savigliano (Cuneo) (IT)
(72) Inventor: TRAMONTANA, Francesco, I-61034 Fossombrone (IT)
(74) Representative: Karaghiosoff, Giorgio Alessandro
(86) International application number: PCT/EP2003/050724
(87) International publication number: WO 2004/044788

(56) References cited:
- EP-A- 0 668 204
- EP-A- 0 773 155
- WO-A-01/01207
- US-A- 5 438 673
- US-A- 5 751 569
- US-A- 5 960 182
- US-A1- 2002 059 050

## Description

The invention relates to a device for checking logical software engines for commanding railway plants, particularly station plants, comprising at least a computer with at least a central processing unit and at least a memory for loading and executing programs:
a logical engine for commanding a plant, particularly a station plant, being loaded or loadable in said memory for its execution, which plant comprises a plurality of operating units for actuating and/or detection and/or measurement and/or signalling, so-called wayside equipments, which units are provided for receiving command signals and for transmitting control signals about the operating condition, and which logical software engine reads control signals given by the operating units for actuating and/or detection and/or measurement and/or signalling and it processes command signals of said operating units basing on an operation protocol of the plant itself.

In railway field, the command of station plants occurs by means of command logical engines which are based on Boolean algorithms. Control and command signals are univocally associated to state variables which are processed by Boolean logic that provides output command signals as modifications of said Boolean variables. Depending on the features of provided operating units, each of the said variables may have various state conditions and the associated variables representing the state controls and the state commutation commands of operating units may vary within predetermined values, each of the said values represents an operating condition of the operating unit as far as variables representing control signals are concerned, while the said values represent a commutation command from a predetermined operating condition to a different predetermined operating condition or a command for maintaining the operating condition as far as command signals are concerned.

Starting from a traditional realization of command and control logics, particularly of railway plants, in the shape of relay networks, at present the greater reliability and stability, as well as the greater comfort and flexibility in using computers, have caused the transfer of command functions from the relay hardware structure to a software command system emulating the behaviour of the traditional relay network by means of a command and control logical program composed of Boolean algorithms.

Because of the complexity of railway plants, even the logic for controlling and commanding the plant is relatively complex specially considering that in railway field the security operation standards are very high.

In order to transform the control and command hardware logic formed by relay networks into a program in the form of a control and command Boolean engine, hardware/software smart systems have been developed to process automatically the control and command Boolean program by starting from a traditional relay hardware network layout or from a table wherein the operation conditions of the plant are encoded in the shape of lists of state variables and state commutation variables, the so-called condition table.

At present the validation, i.e. tests, are directly made on the plant. However, this is a serious drawback firstly because an operating plant is actually required to which the control and command logic has to be applied. This causes great problems due to great prolongation of time for definitive installing a railway plant, since in addition to time for actual structural installation, such as line laying, and the hardware installation of operating units, it is necessary to make long validation phases of the command logic thereof.

To solve this problem, at least partially, software programs for validating command software logics have been provided, i.e. Boolean engines for controlling and commanding the station plants, that process individually and in parallel the same command and control logical engine by means of at least two generation programs of the control and command logical engine, starting from the same basic information about the system structure and the operation modes thereof. WO 01/01207 A1 is an example for such a system. Two command and control logical engines are therefore generated and are therefore compared, whereas the validation is based on diversity criterions of the programs generating the two logical engines which are considered correct in case of functional identity basing on said diversity of the two generating programs.

Such validation or certification mode does not meet fully considerations that are made from the security perspective of the plant operation and so the control and command logical program that has been obtained is always subjected to a deep validation directly on the plant. The certification or validation mode by means of the diversity criterion of the software generating the command and control logical program lacks an interface with the plant.

Therefore, even in this case of software certification and validation, such defect influences again the time for fabricating the plant in operation condition and the time for developing and setting up both the control and command logic and the plant itself. The situation becomes more serious considering not only the installation of a new plant, but also the modification of an existing plant. In such case certifications and validations made on field influence railway traffic that pass anyway and must continue to pass on railway lines already existing. Therefore times are smaller and working conditions are more critical both for the difficulty in working on a plant in use and for the considerations about traffic security that cannot be interrupted except for short periods.

Therefore, the purpose of the invention is to provide a device as described hereinbefore that allows to overcome the drawbacks existing at present and described above.

The invention attains the above purposes by means of a device as described hereinbefore, wherein a software simulation program of the plant is loaded or loadable in the computer memory and is executable by the computer itself, which simulation program must be controlled and commanded by the control and command logical program and which simulation program faithfully reproduces the plant structure and the operating modes of operating units provided into said plant.

The simulation of the plant structure and of the operating units associated thereto, such as track circuits to detect the presence of the train, switch points actuators, signalling actuators and other different units is represented in the simulation program by Boolean algorithms, variables associated to said algorithms being univocally defined to represent control signals of the several state or operation conditions of various operating units and the command signals for commutating or maintaining state or operating conditions of said various operating units.

In a first embodiment the image of the plant behaviour under examination of the control and command logical program is displayed in the shape of variable lists univocally associated to the several operating units. In such case, the program displays or allows to display report files wherein the several operating units and the associated state or command variables are listed.

Advantageously, the simulation program allows the user to set starting operating conditions of the plant and/or setting situations even anomalous of the plant operating units to verify the plant reaction to these conditions.

According to a preferred embodiment, to each plant operating unit and/or to each relevant structural element can be associated univocally a virtual image of the operating unit and/or of plant structural element, which image is generated by means of a graphic program loaded, loadable and/or executable by the computer of the device according to the invention. The virtual image is univocally correlated to the logical program for generating the operating unit or the plant structural element, the graphic program for generating the virtual image of each operating unit being such to generate various graphic aspect conditions of the operating unit, each of them is univocally correlated to a predetermined value of variables relevant to the operating condition of the operating unit itself and/or of command variables for commuting or maintaining the operating state of the operating unit.

According to a further aspect of the invention, the operation of the control and command logical program is additionally in parallel or alternatively represented in the shape of behaviour of the equivalent command hardware logic composed of a relay network, an operation simulation program of relays and an operation simulation program of the relay network being provided, as well as graphic programs representing relays univocally associated to each program for simulating relays and to program for graphically displaying the relay network.

Also in this case, as in the case of operating units, each relay is simulated by means of a logical program of the Boolean type, single state conditions of the relay and/or the commutation commands being represented by state or command variables and graphic programs being such to associate various relay graphic aspects univocally correlated to values taken by said state or command variables.

By means of what said before, the device according to the invention allows to execute the validation or the certification of the control and command logical program of the system on the base of a true and reliable software model of the real plant with evident advantages in relation to certification and validation systems used at present.

The two levels for displaying the functional behaviour of the plant, in the shape of report file displaying values of state variables generated by programs processed by simulation logical programs of operating units and in the shape of graphic representation of the operating condition of operating units allow to check in details the operating units of the plant and therefore the operation modes thereof both in an analytic way and in a direct visual way of the physical operation condition.

A further alternative allowing the display of the command and control logical engine in the shape of traditional relay network allows to check the engine operation according to the traditional hardware logic providing an additional visual check means. However, also in this case it is possible to display physically the aspect modifications of relays relevant to the operating condition, as well as to display analytically the state and command variables analogously to what said for the operating units. It will be noted that the graphic representation of the Boolean command and control logic, in the shape of traditional relay network, allows to check visually the internal operation of said logic, therefore making simpler the identification of errors inside the logic itself and not only on the base of wrong commands sent to operating units. Therefore it is displayed not only the situation of output variables and input variables to the control and command logic engine, but also the situation of modifications to which said variables are subjected during the processing from input to output.

Additionally, the provision of an interface for setting particular operating conditions of the plant or anomalous conditions allows to check the plant reactions with reference to different operating environment. Such settings can be executed by the personnel by imposing specific state conditions to various operating units at the beginning of the execution cycle of the control and command logical engine, being possible, by means of a suitable scheduling, to provide also conditions wherein one or more operating units are non-operating or operating in a anomalous way.

It is easy to notice that in the case of the present invention it is possible to program or configure images and/or state and command variable lists of virtual operating units corresponding to the desired or proper operation or state condition of the plant in conjunction with a predetermined operation situation. In such case, by providing such nominal graphic images and such nominal values of state and command variables of virtual operating units it is possible to make not only the direct and visual verification of a proper operation but also an automatic verification based on the comparison between the nominal image and the table or the nominal list of state and command variables desired and previously scheduled and the image and the state and command variables effectively processed in the moment of operation of the control and command logic with the virtual model of railway plant, an error message being sent in case of non-identity. During this automatic verification can be displayed graphically and analytically the operating unit that assumed a wrong condition and the relative state or command variable/variables.

Such mode can be extended also to the simulating representation of relay network, indicating the relay or relays that have not been commutated in the right condition and the relative state or commutation command variables.

As a further development it is also possible to provide automatic means that correct the control and command logical program on the base of possible corrections made by the user to the state or command variables modified manually in the presence of a state or command error of a virtual operating unit or of a relay in the corresponding command logical circuit constituted of the virtual model of relay network.

In this case, modification interventions both of alphanumeric type made on report files of state or command variables, or interventions for modifying graphically the aspect of the operating unit or relay corresponding to the state of said operating unit or said relay are interpreted by a correction program that analyse the values of state or command variables set manually to correct wrong values, analyse the control and command logical program and modify the code to commute the operating unit or the relay in the correct state condition when occurs the operation condition with which the control and command logical program had previously generated the error.

It is also possible to memorize areas of the virtual station plant and the relative parts of the control and command logical program having typical plant structures that are recurrent in various station plants, to load and reuse both programs of Boolean simulation, and graphic display programs as well as parts of control and command logical programs in new station plants having identical station areas.

The hardware/software structure of the device according to the invention allows to extend the validation and the certification even to a validation and certification system based on the diversity of the program for generating the control and command logical program, for example a so-called Boolean algorithm checker.

It is possible to provide several possibilities. A first of these possibilities is to provide an additional program for generating the control and command logical program object of validation by the device that works according to a code different than that used for generating the control and command logical program during the validation. The control and command logical program generated by the checker may be compared with the control and command logical program during the validation to notice the identity between the two control and command logical programs. In addition or alternatively the control and command logical program generated by the checker may be subjected to the certification or validation by means of the device described above and the results may be compared to those obtained during the validation or certification of the first control and command logical program. In this case the comparison verification is made on state and command variables of operating units and relays of the relay virtual network both from a numeric perspective and from a graphic perspective. For example a overlapping of graphic images of the plant state conditions may be supposed which are obtained with the two control and command logical programs. With this overlapping of the image of plant state condition the possible differences are graphically highlighted or catch directly the user eye.

The two modes described above may be made alternatively or successively one with respect to the other, the modification of the succession sequence of the two different comparison modes being also possible.

By making first the comparison relevant to the plant conditions obtained by the two control and command logical programs it is possible for example to identify better the parts of the program wherein the comparison operations and so the possible correction operations thereof or the debugging enquires (error detection) may be limited.

It is possible to make the certification based on diversity in addition to the control logical program even to the logical programs for simulating the single operating units and the plant structure as well as to logical programs for simulating relays or the relay network and in case this certification action based on the diversity of the generating program may be extended also to programs for graphically representing operating units or relays.

In a further embodiment, the Boolean checker is composed of a parallel device for verifying the control and command logical program of the railway plant by simulating the plant itself, which checker comprises a check or test program and the simulation programs of the railway plant developed according to diversity criterions, i.e. by other generating or writing programs and such checker makes the same certification of the device according to the invention, that is the first checker device, on the same control and command logical program, the results of the two parallel tests being compared and from this comparison information or error messages are generated depending on the result of the test if it is equal or if it has diversities.

In the field of the device according to the invention a design program is included, i.e. for generating the Boolean code and the program for graphically representing the wayside equipments.

While the device of the present invention is based on traditional or substantially traditional processing systems, it should be noticed that actually it is a technical device constituting substantially a virtual simulator of the real plant structure and so it has advantages and technical effects.

The choice of software means is based on the fact that the command logic is a software too, whereby the implementation by means of a software means is the best solution.

It should be noticed also that the device according to the present invention may be provided with a suitable network interface and it may become a non-vital node of the railway plant by means of which it is possible to modify easily the command and control logical program and to overcome virtually the same, for example in the case of a structural modification of the station railway plant, such as the removal of a line or the addition of a line with the corresponding operating units.

Moreover the device according to the invention as a node network connected and interfaced with the railway plant may have supervisory or diagnostic functions of the correct operation of the real railway plant, because it is easy to make a comparison between the state condition that has been assumed by the real plant and the one assumed by the simulated plant by providing the device with the same input variables of the real plant for the control and command logic. Such comparison may be made analogously to the comparison of the plant conditions obtained with the two control and command programs as described before for the additional validation or certification based on diversity criterions.

By means of the device according to the invention, since it is a node that is part of a control and command system of a station plant, it is possible for example, in emergency event, to simulate various possibilities for intervening and commanding the plant to realize, on the plant itself, the choice that offers the best solution among the possible choices.

Advantageously the device according to the invention comprise a program for executing the simulating functions with a user interface of the type used by Windows ® program of Microsoft Inc. and that therefore comprises operating windows with function buttons, quick choice menus and other functionalities typical of said interface, in addition obviously to the use of mouse or of other pointing means, to selection and input of commands and the keyboard to input numerical, alphanumerical data and/or numerical or alphanumerical commands, such as to create and modify the graphic images of operating units and/or of relays or of other parts of the plant structure. This makes the actions very simple and easy for the employed personnel by creating an interface between the computer and the program and the user that is very known and of large employment.

Further features and improvements of the device according to the invention are subject matter of the dependent claims.

The features of the invention and the advantages derived therefrom will appear more clearly from the following detailed description of some embodiments by way of a non-limiting example illustrated in the annexed drawings, in which:
Fig. 1 schematically shows a device according to the invention in the shape of a computer or a personal computer and the possible remote connections.
Fig. 2 shows a flux diagram of the functional test made by the device according to the invention.
Fig. 3 shows a schematic diagram of the internal functions of the device according to the invention.
Fig. 4 shows an example of a display window of the system graphic layout, particularly of the station or the station region simulated by the device during test function of a command and control logical program of a railway system.
Fig. 5 shows two details of toolbars and instruments of starting windows for carrying out the verification by means of the device according to the invention.
Fig. 6 shows an example of windows that are displayed when the complete simulating and test program is loaded and wherein a control window is opened for the dev_p1 equipment.
Fig. 7 shows an example of a window for the add and modify selection of simulating programs of system operating units, particularly wayside equipment.
Fig. 8 shows an example of a window for the interface specification of each operating unit or equipment simulator defined by fig. 7 window.
Fig. 9 shows an example of a window for executing the specification function of the behaviour of the operating unit or of the equipment in relation with the virtual model composed of the Boolean simulator that describes it.
Fig. 10 and fig. 11 show drop down menus that can be activated by the specification window of the behaviour of the operating unit or of wayside equipment to execute particular specification functions of said behaviour.
Fig. 12 shows an example of a window for selecting graphic aggregates.
Fig. 13 and 14 show additional windows to execute functions for modifying or adding graphic aggregates accessible by buttons of the window for selecting graphic aggregates according to figure 12.

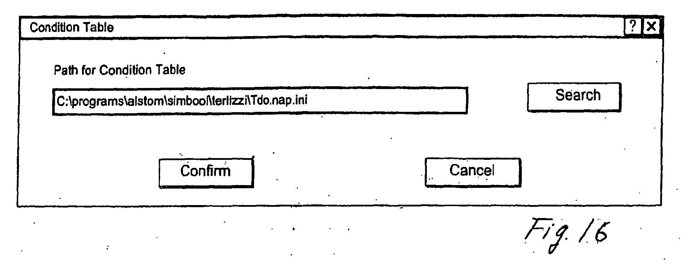

Fig. 15 shows an example of a window to execute the state and colours specification of graphic objects.
Fig. 16 shows a window for selecting and loading a "Condition Table".
Fig. 17 shows an example of "Condition table" file.
Fig. 18 shows an example of "stimulation Commands" window.
Fig. 19 shows an example of a window for managing simulation commands accessible by quick button or menu command in the window according to figure 18.
Fig. 20 shows an example of a window for selecting the variable value accessible in the window according to fig. 18 by quick button or menu command.
Fig. 21 shows a window for displaying Boolean equations of the control and command program.
Fig. 22 shows a window for displaying the equivalent circuit of a Boolean equation of the Boolean equation system composing the control and command program during the test step.
Fig. 23 shows an example of a window for displaying the circuit of a simulated equipment.

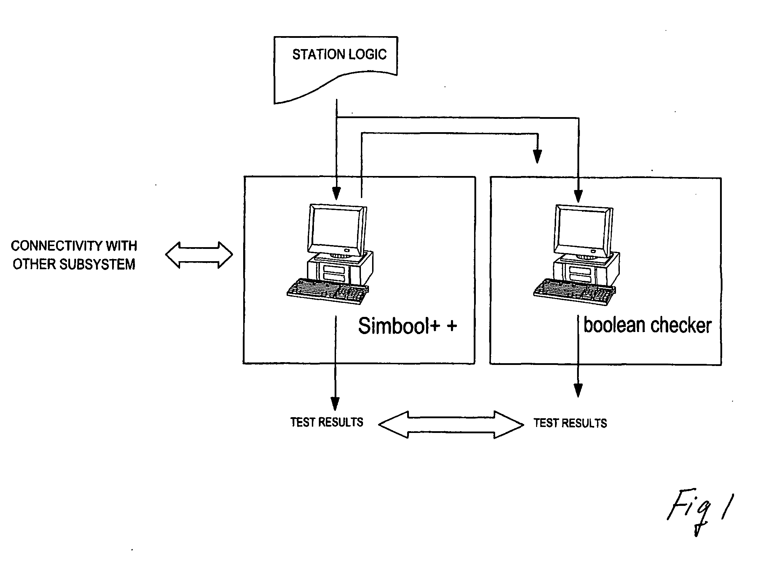

Referring to figure 1, the device according to the invention consists of a function simulator of one or more systems that are composed of a station apparatus with a vital computer with regard to test of the command and control application logical program which is implemented as a group of Boolean equations. The device is formed as to simulate a station apparatus with a vital computer in all its operating conditions.

In traditional systems for commanding and controlling railway plants, the application logic for operating the system is in the shape of a relay network. Lately, with introduction of computers more and more reliable and steady, application logic of the plant has been replaced by a command and control logical program which is executed by a computer. The program is comprised of a group of Boolean equations that cyclically read the state conditions of a plurality of operating units, the so-called wayside equipments, such as track circuits for detecting the presence of trains at predetermined line lockings, signalling devices, switch points, etc., and basing on said conditions, coded in the shape of state variables, the Boolean equations compute or define new output state variables that constitute commands for commuting the state or for maintaining the operating state of operating units for the adjustment to conditions represented by the input variables.

The group of Boolean equations has to execute the computation of the state conditions of wayside equipments in a way corresponding to predetermined operation modes that are coded in functional behaviour tables of the plant, so-called condition tables. The device according to the present invention has to emulate the functional behaviour of a railway plant, that is a vital computer railway apparatus. Such emulation allows to verify the control and command logical program expressed by the formalism of the Boolean equation system as if the verification is executed on the real plant itself. And this occurs both when the plant is in correctly operating conditions and when there are anomalies of one or more wayside equipment.

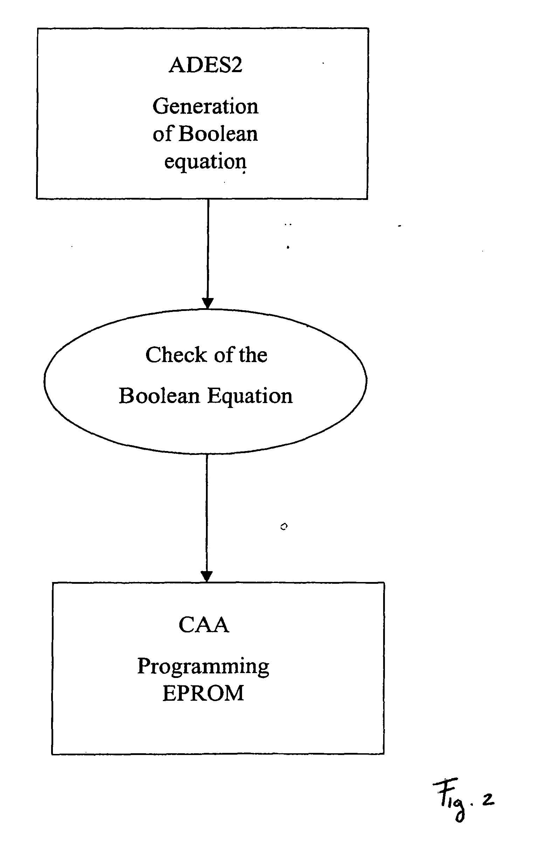

The device according to the present invention as shown in figure 2 includes a computer memorizing a test and simulation program and has interfaces to data and/or commands inputting means, display means, connecting means to remote apparatus, such as the station apparatus with vital computer, remote computers for executing collateral procedures and so on. The emulation program includes several routines and in particular:
a routine to execute the Boolean equations that composed the program itself;
a routine to configurate input or initialization variables of Boolean equation system, that is the setting of operation backgrounds of the plant;
a routine to display the graphic image of the plant and of operating units included therein and which provide an image of operating units that is different for each of the operating states that can be assumed by the operating units or wayside equipment and which graphic image is univocally connected to said state or said operating condition of the wayside equipment, as well as to other collateral routines that complete and simplify test actions.

The plant simulation occurs by generating a virtual model of station plant wherein the operating and/or structural elements of the plant are univocally identified and whose functional behaviour is restored by Boolean equations.

The physical structure of the system is defined by associations of said structural or operating units that describe and/or display the respective arrangement in the plant diagram and define which operating units have to work together.

As it will be noticed more clearly below, the operating units, i.e. wayside equipments, are described by output state variables so-called control and that describe the operating condition of the unit or wayside equipment and by variables for maintaining and/or modifying the input state that indicate if the operating unit has to change state or not and towards which state the transition has to occur.

To generate the virtual model of the railway plant, the device according to the present invention provides not only the simulation of the functional behaviour of wayside equipments in the shape of logical program in the form of Boolean equations, but also the graphic representation of the wayside equipment. Such graphic representation comprises several predetermined graphic aspect options of the wayside equipment, each of them corresponds univocally to an operating state thereof and is associated to one of the predetermined values that are assumed by the state variables of the simulation logical program of the wayside equipment or to a predetermined value combination of two or more state variables provided by the simulation logical program of wayside equipment. Obviously, the graphic aspects of the wayside equipment will be schematic reproductions of the wayside equipment aspect and the several aspects corresponding to the several operating conditions of each equipment are different one from the other so as to reproduce as much as possible the real modifications of the aspect of wayside equipment in various operating conditions.

Advantageously the device according to the invention may also comprise tools for modifying and/or generating simulation logical programs of wayside equipments and/or of the graphic aspect for representing said equipments in various operating conditions. These can be memorized and then recalled as generic routines that assume a specific and unique role in a predetermined plant diagram by means of defining univocal identification names and univocal relations or functional associations with other wayside equipments or other structural elements of the plant as well as with corresponding arrangement relations in the space regarding the placing thereof in the graphic representation of the plant.

Obviously, as results from figure 1 the plant can operate also in direct combination with units generating the control and command logical program and/or with the real vital computer station apparatus and the real railway plant, being a non-vital node of a connection network with said units.

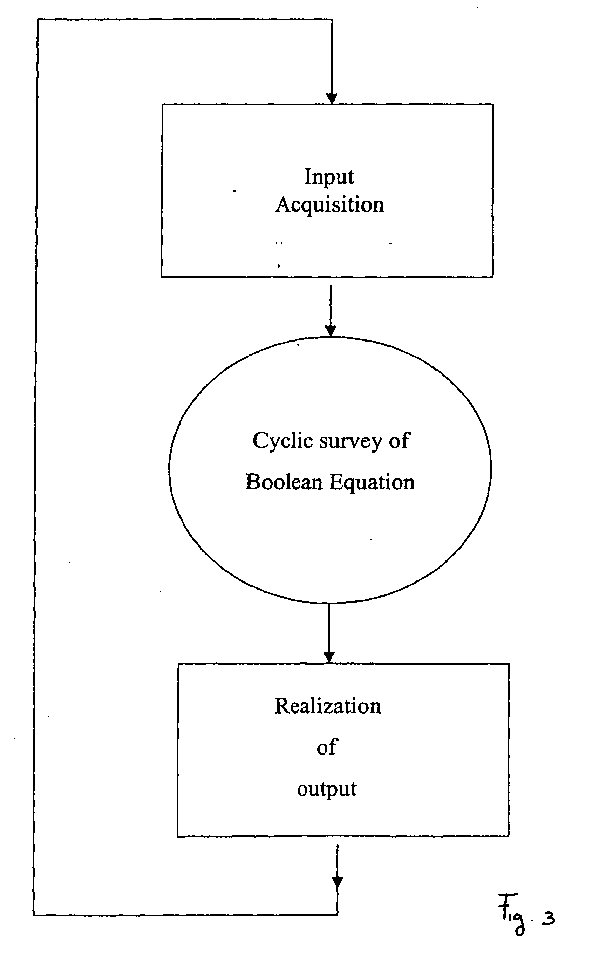

Therefore, referring to figure 3, the device substantially is a workstation based on a personal computer. Advantageously the preferred operating environment is Windows NT ® environment upon which the specific device simulating software is set up. Said choice of the operating environment is an advantage as Windows NT ® environment and its basic functionalities are broadly known. Therefore the operating environment is structured as to display several work windows, comprising the station or plant diagram, while the user is working on configuration and/or control elements of the simulation device itself. By means of one monitor and preferably two monitors the user can see directly the selected functions or set actions, as the main simulation logical program and the graphic management program interact therebetween.

The auxiliary display is controlled by the desktop extension functions already provided in Windows ® environment.

The software of the device is made as a typical Windows ® application and therefore it employs typical tools of the operating environment. Here the specific sphere of all the possibilities and of the window structure of Windows ® is not considered since this is part of a basic common and widespread knowledge.

To execute the checking by means of simulation with the device according to the invention it is necessary to make several starting activities comprising the following steps:
generating the graphic descriptive file for check means;
checking said graphic file;
generating Boolean equations whose system is the core of the control and command logical program;
possible generating of the conversion table;
possible generating of the coded condition table;
possible generating of text files so-called batch commands.

The checking activity of the command logical program uses check means that are generally known.

The check program by means of railway plant simulation comprises the following data:
File with Boolean equations that describe a station or an area to be checked;
Graphic files of the station or station or area o areas to be simulated;
Possible files containing the conversion table;
Possible files containing condition table
and possible text files containing batch files.

As the result of test is provided an output report file that can be used by the user and/or memorized. During the test execution, the dynamic operation of the railway plant may be controlled both real-time and in case later and this by means of the display of alphanumeric messages or of state variable values and by means of the graphic representation of the plant itself.

The starting of the working session may comprise the generation of a new project or the loading of projects already started. If it is a new project one or more stations or plant areas have to be selected to use in the simulation.

After the loading and/or the generation of the project data it is necessary to provide the device configuration. The activities to be executed to make the test by means of railway plant simulation are: setting of a system cycle time; definition of suffixes for each kind of wayside equipment, definition of simulators of wayside equipments, the possible addition of area to be controlled, association of equipment simulators to variables; definition of colours and states that the drawing objects can assume, assignment of stats and colours to the drawing objects.

As already said, there is also a command that operates directly on the graphic diagram of the station or of the plant area to define equipment states and objects colours.

It is possible to activate control windows by selecting windows or objects to be inserted in windows and/or to activate the command bar if it is not already active. Obviously it is possible to make tests and save the current state of the project. To this end, it is convenient to make savings as the simulation situation evolves, saving always with different names to not overwrite the old configuration. Each configuration is re-loadable to start a new simulating step. During the simulation it is possible to execute configuration batch files corresponding for instance to different operation or configuration background of the plant or to different commands.

The device can be completely managed by a remote workstation by means of a command and remote connection module, particularly by means of network protocol and more preferably by means of TCP/IP protocol.

The user may end the check process by simulation at any time without loosing the work already carried out, by saving the project. Project means all files generated before the test process and all files generated during the configuration and simulation steps thereof.

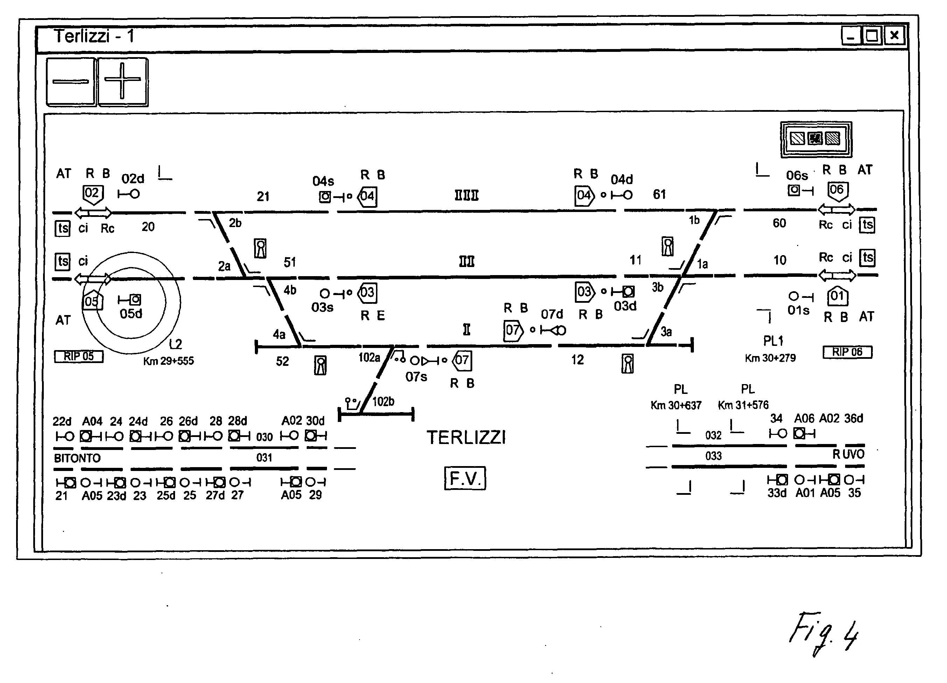

Figure 4 shows an example of a screen showing what appears on a monitor during a test execution.

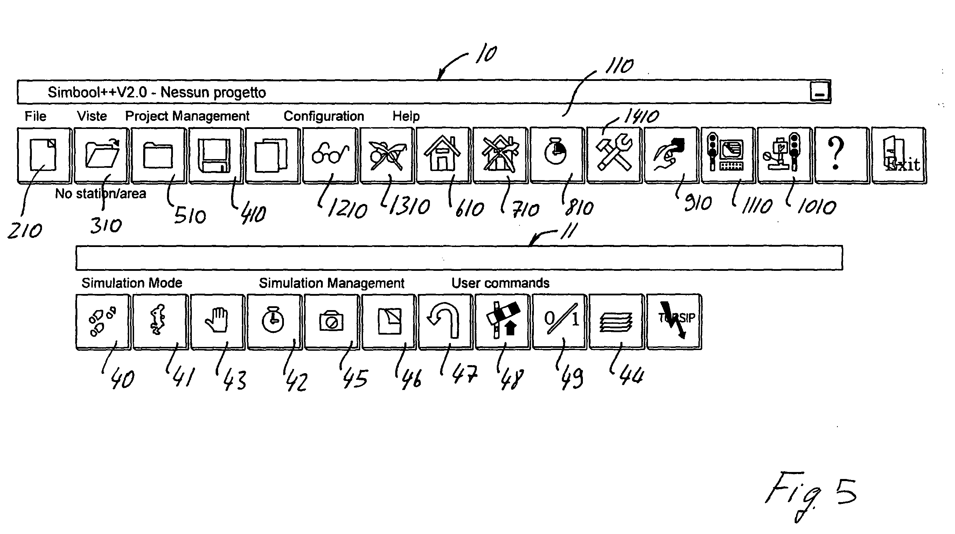

The first screen that appears by starting the system is substantially similar to that of figure 5. A window wherein the top 10 allows to manage the application is opened, whereas the window 11 is the command bar for the simulation. This second window can be shifted by highlighting the top band and dragging it in a location useful for the user.

Directly below the main command line 110 (file, Views, etc.) a quick button bar is displayed to activate quickly some commands.

The meaning of buttons will be disclosed in sections that deal with the command itself.

Moreover a help command or button is provided which activates a help menu by which it is possible to enter or consult a guide file. The guide can be of interactive type or on line analogously to Window**s** ® environment. Analogously to this environment once activated the command, a window of the guide appears from which it is possible to select display, printing options and so on.

File command in the command bar 110 allows to start a new project or to open an existing one, to save the current project and to save the current project and exit the application. The command options of file command are accessible by means of a typical drop-down menu which lists all the command options and it is possible to select the desired command therefrom.

Some or all the commands can be personalized and transformed by creating a routine in any kind of quick activation buttons.

Quick button 210 allows to start a new project, in order to define the whole background of a simulation, that is to define the stations to be examined, control windows which are desired to be activated, variables to be displayed, display modes, as for example the window aspect, colours, intermitting colours, displays with numerical wave-forms or of other kind.

If a project is already loaded in the device, the user is asked to save or eliminate the project by a communication window having command buttons for executing the above several options.

In order to save a loaded project it is possible to use the corresponding command of "file" menu or to use the save quick button indicated at 410.

When loading, the program controls syntax and semantics of configuration files and of graphic drawing file of the plant, of the areas thereof and of wayside equipments. Moreover, the simulator modules are identified, i.e. simulation programs of operating units, i.e. of wayside equipments and graphic display modes of wayside equipments or operating unit states, such as colours of graphic objects of the drawing. When said files include an irreparable error, the device does not load the file that has errors. Errors are listed in a summary box of a window displayed for each plant, station or plant area.

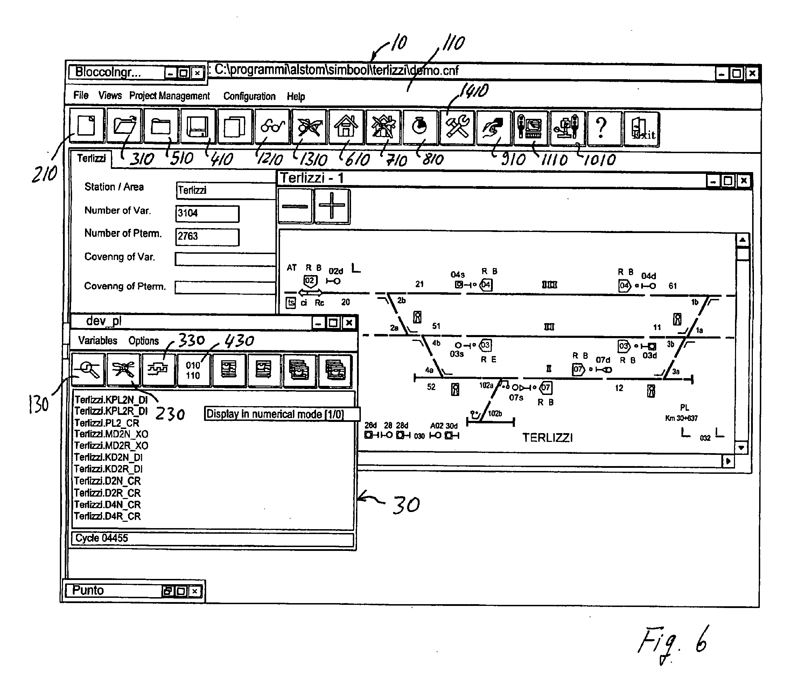

The finishing function is ended when the operator sends a confirmation and the result of loading is the opening of two windows 10 and 30 as shown in figure 6. In addition to the main window 10, is generally displayed even the control window 30 and the graphic layout of the plant or of the station or of the loaded area.

The loading of a project provides displaying of following data:

Name of the plant or of the station or of the area, number of variables which are included in equations describing the plant or the station or the area, number of Pterm, i.e. product terms obtained in the Boolean equations, of the plant, or of the station or of the area, the variable covering, i.e. the percentage of variables processed with the proceeding of the simulation and the covering of Pterm, i.e. the percentage that has been processed with the proceeding of the simulation.

The quick button 510 provides the closing function of a project. Project management menu that is accessible from the command bar 110 of window 10 makes available two commands that are Add Station/Area and Cancel Station/Area commands. To these commands quick command buttons are associated which are indicated at 610 and 710 in the quick button bar.

Add Station/Area command or the corresponding quick button 610 allows to add a new station or a new area to the project that is already loaded in the memory.

A dialogue window is displayed for specifying the Station/Area. The user can specify filenames belonging to the station or to the area that the user must type in a field of the dialog window. Instead of typing the name, the user can use a searching means which is accessible by means of a searching button. In this case a window is opened wherein saved stations or areas are displayed. With pointing means, the user can select and load the desired stations or areas among these in the list. It is also possible to select the format of graphic files that contain the station or area graphic drawing for example a CAD or TGIF file type.

By the "Layout" button the user can specify the particular files constituting the station or area graphic drawing. Depending on the drawing format, a dialog window is opened to specify the corresponding station or area. In the predetermined field the user can indicate the drawing filename for example in CAD format. An auxiliary CAD file field allows to specify a file containing further graphical symbols to be naturally joined with the CAD drawing. When the selection ends, the program loads the station or zone configuration file and the station or zone drawing files. During the loading, files are syntaxly and semantically controlled. If files have irreparable errors, the system does not load files containing errors. The program lists errors in a summary box. If a serious error occurs in the configuration definition file, the station or the area will not be made in the memory. If the loading is properly ended, the station or the area is made in the memory and the graphic drawing appears on the screen.

It is possible to execute the action of eliminating a station or an area from the project by means of Cancel Station or Area command or by means of the corresponding quick button 710.

The command bar 110 provides the additional "configure" command. This command provides the possibility of choosing between several options in a menu. A first option is the cycle time definition command. Even for this command a quick button is provided indicated at 810 in figures 5 and 6.

The logical program for controlling and commanding a railway plant, particularly a vital control station apparatus, executes the reading of control signals provided by wayside equipments and the sending of command signals according to a cyclic operation. Typically the whole transmission and processing reading cycle is executed in about 500 ms. In each cycle the Boolean equations which formed the control and command logical program are recalculated. In the program of the device according to the invention, the user can set any cycle time corresponding to a real number. To this end, the quick button 810 or the menu command cause the opening of a window for setting the cycle time wherein it is possible to specify a cycle time.

The "Configuration-Modification suffixes" command, allows to determine the suffixes. It is an important action since suffixes determine the behaviour and the semantic meaning of Boolean variables in the system configuration file, that is equation file. A wrong suffix definition may cause an irreparable error during the processing of the system definition file and this error disables the management of corresponding stations or areas or wayside equipments, i.e. of operating units. Suffixes have to be defined in compliance with similar definitions included in the system definition file, that is in the data file from which system EPROM memories are programmed. Settings of suffixes are executed with the help of a dialog window.

It is possible to use a box for modifying the suffix to specify suffix name. The name can include block letters. A " Type" drop down menu comprises all possible types that are available and selectable.

Suffix meanings are:
Input: It is possible to use variables of "input" type only on the right (element of a product term) of a Boolean equation into the system configuration file. When reference is made to a variable of "input" type on the left of a Boolean equation, as a result the program points out an error during the system definition file loading.
Output: Variables of "output" type have to be used on the left of a Boolean equation only once. When reference is made to a variable of "output" type on the right of a Boolean equation or more than once on the left thereof, the program points out an error during the system configuration file loading.
Current cycle: It is possible to use variables of "current cycle" type on both sides of a Boolean equation. A reference to the variable is possible only once on the left and so many times as desired on the right of equations which are successively calculated in the same cycle. If the use of a variable of "current cycle" type does not comply with the above norms, the program points out an error.
"Subsequent cycle": It is possible referring to variables of "subsequent cycle" type on both sides of a Boolean equation. These variables may be placed on the right of an equation (term) at any time. If a reference has been made to such variable on the left of an equation (result) it is not more possible to use it on the right i.e. in equations executed in the same processing cycle but calculated successively.
Shared input: "shared input" variable type is similar to "input" type having the only difference that the program updates these input values by using suitable "shared outputs" of other areas or other equipments after each calculating cycle.
Shared output: "shared output" type is similar to "output" type having the only difference that the program employs values of these outputs to update suitable "shared inputs" of other areas or other equipments after each calculating cycle.
Timed: "timed" type is similar to "current cycle" type. The difference is that the variable associated to "timed" type will be true if the equation calculating it is true and the delay time that is specified for the variable is expired, starting to count when the starting equation becomes true. If the variable associated to the timer has been previously calculated as true and the equation associated thereto is now calculated as false, the value of the timed variable will go immediately to false without any delay. An equation used to calculate a variable of "timed" type must be preceded by the definition of a delay, as indicated before with reference to the command for setting the system cycle time. The program point out an error if a delay for an equation of a non "Timed" type has been specified or if an equation of "Timed" type is not preceded by a delay specification.
Blinking Output FLS: this type of variable is equivalent to the "Output" type. The equation that calculates the value of a variable of "Blinking Output FLS" type must be preceded by an equation calculating the value of a variable defined as "Output". If equations do not meet this condition, the program point out an error.

The command bar comprises an additional command called "Configure-Add equipment simulator". Analogously to other commands, also this command can be activated by a quick button indicated at 910 in figures. By this command it is possible to define a physical equipment or operating unit simulator. The definition of physical and logical equipment simulators consists in defining a model that is made in three steps:
defining a name for the new simulator;
interface specification;
designing the behaviour;

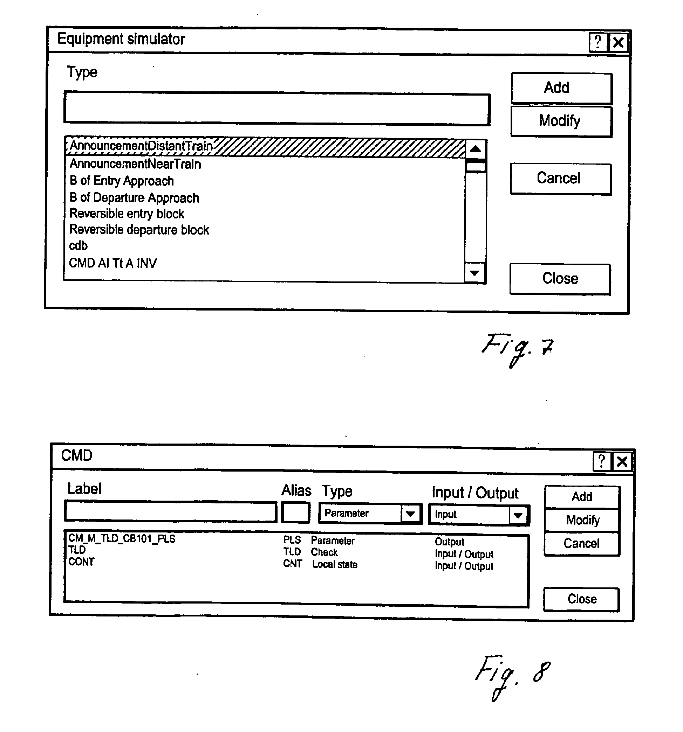

A window is activated an example of which is shown in figure 7. The window allows the selection of simulator name. The name may be typed in a suitable box of the window. An add button allows the addition of the specified name to an existing simulator list and at the same time it opens a dialog window for defining interface and the window of the truth table for the new simulator. If simulators having the same specified name already exist, the program denies the action and it opens a dialog window with an alert text to inform the user. By a modify button the user can modify existing simulators. Modification function allows the modification both of the simulator name and the content. The program allows to modify more than one simulator at the same time.

For removing a simulator from the simulator list it is possible to use a cancel button which will remove the simulator whose name has been highlighted in a selection dialog box.

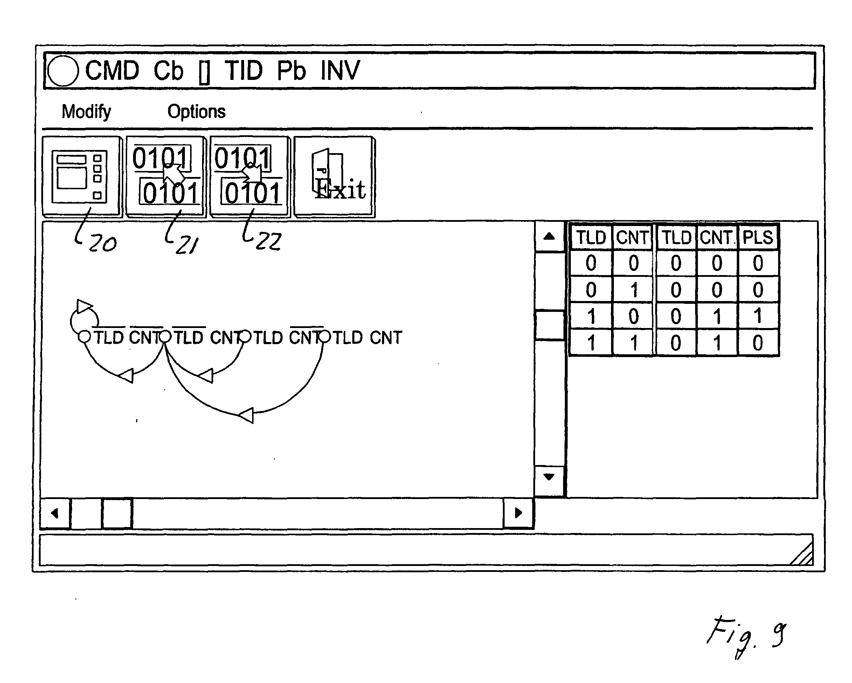

As regards the simulator interface constituting the second step for defining each simulator, this is composed of a form set and of corresponding alias, types and functions. To specify the interface a dialog window for defining the interface is displayed as illustrated in fig. 8.

The user can specify a form by using a "modify" command button provided in said dialog window. This form is used to identify the variable right name during the simulator-variables association. A form can include parametric or constant components in arbitrary order and depending on the syntax of the form itself. The form definition is an obligated step. Alias is the form short name and it is used to identify the form in the truth table of the simulator. Alias name has to be defined in an alias box in the interface definition dialog window and this name specification is necessary.

The form type substantially describes variable rule which are represented by the form in the simulation. It is possible to select the used type with a "type" option box.

The variables types are:
Parameter: the parametric type variables represent the outside simulator interface. The equations of the vital computer station apparatus control the simulator by using these variables, if they are defined as "inputs". If variables are defined as "outputs" this means that they are used as equation input variables of the control and command logical program to determine and to update the system state.
Control: Such variables are used to control the simulator behaviour. These variables are associated to buttons to offer the user an interface that allows to modify the simulator behaviour during the simulation or to simulate possible failure situations. Control variables may have input or input/output attributes. The output attribute is not inhibited but it has no meaning in the case of control variables. Variables with "input" attributes are associated to a button that is pressed by clicking with the mouse and released with another click. If a variable is provided with input/output attributes both the simulator and the user can set the button state. For example the user clicks on a button to activate it and the simulator can release it after some action cycle. The form associated to "control" type can include only constant components.
Local State: "local" type variables are used to memorize simulator internal states. That is to say that this kind of variables allow to define a sequential behaviour and not only a combinatorial behaviour. These variables are not visibly from the simulator outside. These variables may have only input/output attributes. The form associated to the local type variable may include only constant components.

Input and output attributes may be selected by using an "input/output" option box.

After having specified form alias, the type and "input/output" attribute, the user may add these information in the interface by an "add" button command. Both the specification of the alias and the specification of the form are obligatory and must be univocal.

It is possible to modify the specified attribute group such as form, alias, type and "input/output" by a selecting action in the dialog window list and by using a "modify" function button. Analogously it is possible to remove a specified attribute.

The third step for the simulator definition comprises the functional behaviour design. To this end the program is provided by a window with a truth table (see right side of fig. 9). This window is automatically opened when the user defines that the addition of a new equipment simulator is desired. The truth table is divided into two parts separated by a thick vertical line. The left part of the truth table represents the simulator current states, while the right part is the subsequent state. The table includes a column for each variable defined in the interface. Variables with "input" attributes appear on the left, while variables with "output" attributes appear on the right. Variables with "input/output" attributes appear on both sides. The table header includes variable alias names.

This representation allows to design both sequential and combinatory logic which functions for model the simulator behaviour. If a user designs a sequential logic (i.e. a logic including "input/output" attribute variables) on the left side appears Markov logic model. Circles represent logic states, while arcs are transitions. Positioning on arc arrows, the program displays the possible input states to start the transition and the output states set during the transition. The window structure is shown in figure 9.

In the case of a new simulator, the right side of the truth table includes "+" characters representing a not initialized state. The user can overwrite the values in the cells of the right side (outputs) by clicking on a cell with the mouse button. Practically this means to define that determined output state when input conditions appeared (left side of truth table). The present table sums up value meanings that can be assumed by each single cell of the truth table.

| TLD | CNT | TLD | CNT | PLS |
|---|---|---|---|---|
| 0 | 0 | 0 | 0 | 0 |
| 0 | 1 | 0 | 0 | 0 |
| 1 | 0 | 0 | 1 | 1 |
| 1 | 1 | 0 | 1 | 0 |

| | | | | |
|---|---|---|---|---|
| "*" value is a cell value not initialized. "X" value means that if said value is given to a cell on the right side of the truth table, in the same row even all the boxes of the left side will have "X" value. This means that the state identified by the corresponding row is not available. Practically this is a combination that is not admitted or used during the simulation. "0" value means that when input conditions in this cycle are verified, next cycle output will go to "0" value. | | | | |

Analogously the "1" value allows that in the subsequent cycle the output will go to said "1" value.

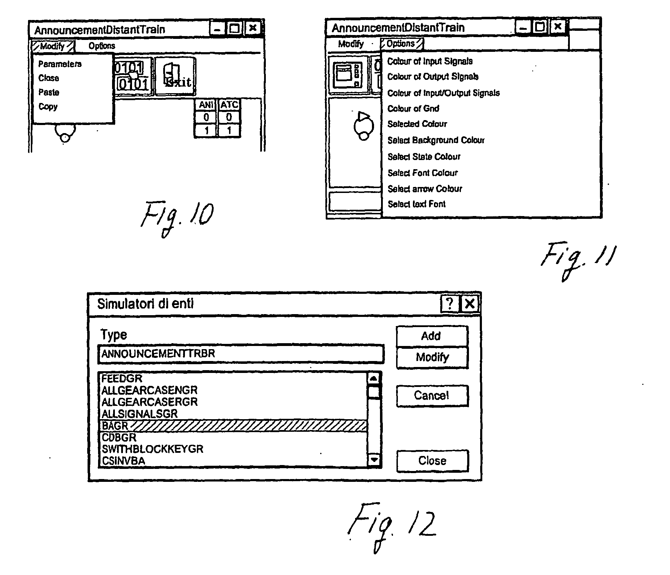

In order to help the user the window offers further functions illustrated in figs. 10 and 11.

It is possible to enter functions not only by menu commands but also by quick buttons, as will be described hereinafter.

Modify-Parameters command can be executed also by the quick button indicated at 20 in figure 9. This command closes the interface definition dialog window. When the dialog window is closed it is possible to open it by clicking on said button or by using the command.

Modify-Copy command or the quick button indicated at 21 in fig.9 allows to select and to highlight any square area of truth table using the mouse as selection and activation tool. The selected area can be copied in note file.

Modify-Paste command allows to control the content of noted in a selected area. The selected area has to correspond in size to the area that has been memorised in notes.

Other commands are accessible in this step. For example the user can modify colours whereon selecting, modifying character fonts or task layout fonts.

The Association function of equipment simulators to variables allows to associate the simulators defined in the system to a suitable variable group. Such function is activated by means of Device Configuration-Definition command or by means of the quick button indicated at 1010 in figs. 5 and 6. To create a link between a type of simulator and logic variables associated thereto the user has to specify the station/the area or the equipment to which it is applied, the type of simulator and the label of the wayside equipment or of the command to be simulated. To help the user it is possible to select these information by using option boxes of a dialog window. Option boxes allow to load the name of the area, of the station or of the equipment already defined, the defined simulator type and, if there are loaded drawing files, the label included in graphic objects of drawings. Even if the program prompts the possible information, the user is free to type any desired string. Such possibility allow to specify simulators which will be realized later, to make reference to a non-loading station and to specify the objects to be simulated which have not a graphic representation in drawings.

The association between variables and simulator occurs during the project loading process that is made after pressing the close command. If the loading process is not capable to carry out the desired association, the program points out an error and displays a message into the loader dialog box. These association errors do not prevent the simulation that can goes on with valid associations. The identifying string may include one or more labels separated by a "," character. The identifying string has to correspond to forms defined in the interface of the associated simulator. The program prevents the multiple definition of a descriptor by displaying a proper error message.

The definition of colours and states of the drawing objects occurs by means of the Layout Configuration command in Configuration menu or by means of the quick button indicated at 1110 in figs. 5 and 6.

The state and colours of a graphic object that represent a wayside equipment, an area or a station, are determined by a variable group defined in the station/area configuration file. The variable group is described by using a form for each variable of the group. These forms are used to find variables during the step of " assignment of state and colours to the drawing". As in the equipment simulator definition, it is possible to define the state and the colour of drawing objects in three steps:
Type of graphic objects included into the drawing;
Specification of interface, to be done for each element that has been added or modified during the preceding step (type of graphic objects);
State and colour of the drawing objects, to be done for each interface of the preceding step.

Therefore the first step is the specification of graphic objects types included into the drawing. To this end by activating the Configuration-Configuration Layout command or by pressing the 1110 button, the program displays the dialog window illustrated in fig. 12.

The user can type the name of new definition of graphic object in the "Type" modification box of the dialog window. The subsequent steps for defining the interface and for defining colours occurs by adding and modifying elements.

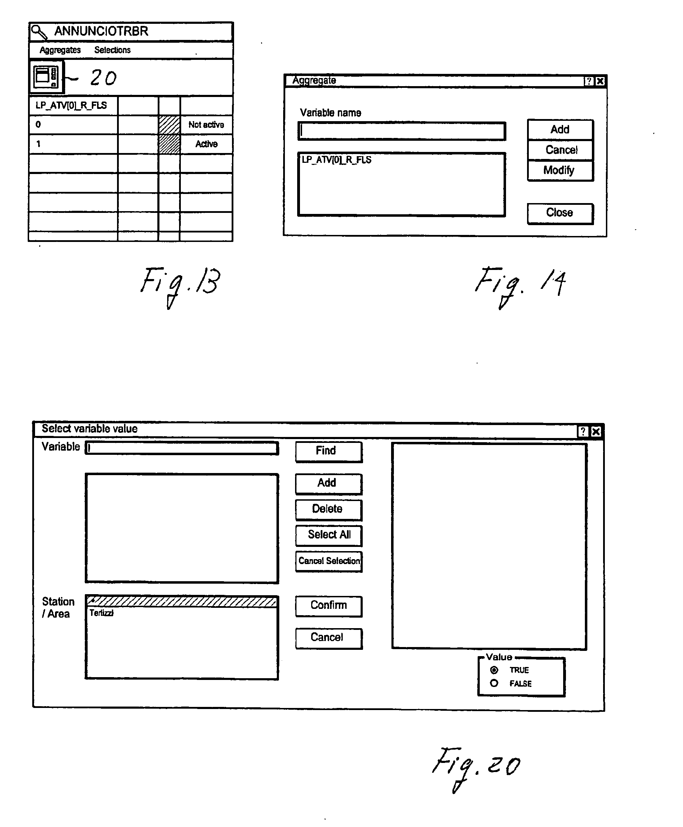

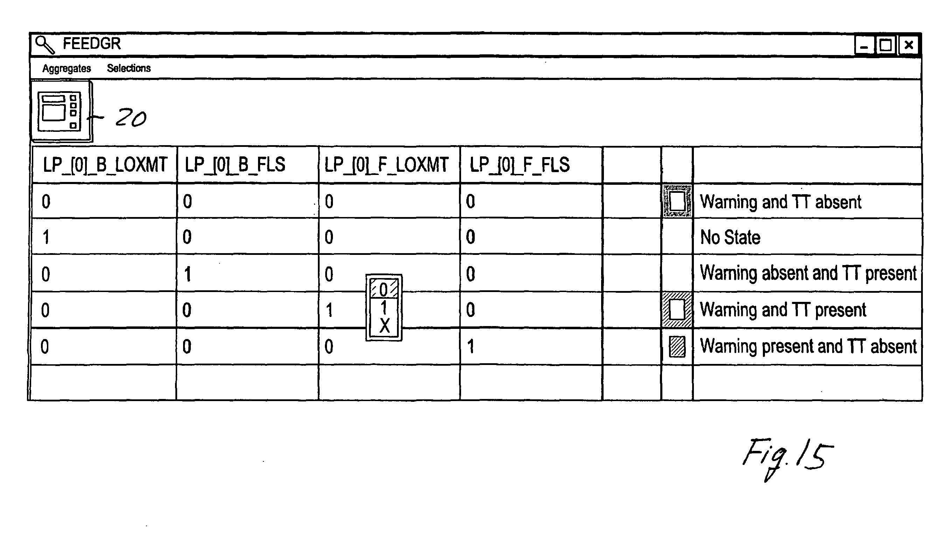

When the modification option is activated, by means of a correspondent button, two new dialog windows are opened shown in figures 13 and 14 respectively and which windows allow to modify or add graphic objects.

The interface specification occurs during the second step for defining the state and the colour of objects. The interface is a variable group to determine the current colour state of graphic objects. It is possible to define the' variable group by using the dialog window illustrated in figure 14. The user can specify the variable name in the provided box by using the same syntax of which it has been already said discussed. Analogously to what has been already described more times referring to other functions, the dialog window has various buttons among which the Add button. In this case, such button causes a routine to add the specified for into the variable form list. The program controls the form from a syntax perspective. Moreover, the program removes the wrong form and sends an error message that is displayed in the message area. The program prevents using suffixes which are not defined in forms.

After the interface specification, it is necessary to define the state and the colour of the drawing objects. The user can specify a state text, an outline or filling colour for graphic objects of the drawing by using the table of fig. 14.

The window which can be resized to the maximum screen size includes variable list (forms) of the first row (header). The table, as already said, is divided into two parts separated by a thick vertical line. The left side of the table includes state table that can be scrolled by the underneath cursor or individually if the state table is bigger than the window, whereas the right part includes coloured signalling and the associated text. The user can specify form states by clicking on a cell with the mouse, the program displays a summary box for selecting the cell value. Entries of state summary box are:
"0": this entry set the variable form on false.
"1": this entry set the variable form on true.
"X": this entry removes the whole row containing cells that have been activated by the mouse.

It is possible to add a new row to the definition table by clicking with the mouse on a cell of the first empty row in the state table. In this case, the program displays the same above state table, but the selected "0" and "1" values are used to initialize the whole row. If the row has been initialized is than possible to set the desired values for each cell of the row as described above.

On the right side of the window are indicated the selected colours for the signalling. It will be noted that each box is a square with an internal colour and an outline or frame colour, both colours being alterable. For each row that has been filled in the table, it is possible to define a colour for outlines, a filling colour and a state indication text. After having defined a row, the program assigns the predetermined colour and state and displays the colours and state into the two columns on the extreme right of the table. The predetermined outline colour is intermittent light grey, whereas the filling colour is intermittent dark grey and the predetermined state text is "no defined state".

It is possible to modify the outline colour by clicking on the thick edge of the colour definition square in a row. In the same way it is possible to modify the filling colour by clicking with the mouse on the internal square of the colour definition square. To modify colours a dialog box is displayed. Even the flashing attributes may be modified in a analogue way as hereindescribed by using the mouse and clicking with the right button on the section that is desired to become flashing. The flashing is ended by repeating this action. It is also possible to modify the state text by clicking with the mouse on the text to be modify in the extreme right column of the table.

According to a further characteristic of the device of the present invention, the device may comprise means for connecting to a network for the connection to workstations or to other remote devices. The network can be realized according to various protocols. The network protocol that is generally used is the TCP/IP protocol due to its great spreading. The remote unit can be used to control the device and also to load and execute pre-existing simulation command files that have been previously written. Said command files called "batch files" can be also directly loaded in the device by means of proper and known reading interfaces, as for example files that are memorized on floppy disks, CD-ROM, or the like.

However in both the above cases it is necessary that batch file commands are translated in a language that can be executed by the application of the device according to the invention. To this end a translate table is provided called conversion table. This one is offline written and must be loaded in the device according to the invention before executing the batch file or before executing the connection and the command from a remote workstation. The condition table selection command allows to select a Condition table indicating the path. A dialog window is opened as the one illustrated in figure 16. The Condition Table file path can be directly written or a search function can be activated by means of a "Search" button provided in the dialog window. When the Condition Table file is found, by selecting this file it is possible to confirm its loading by means of a function button provided in the dialog window.Advantageously the Condition Table file is structured with a structure similar to that of Windows files .INI.

The present table illustrates the basis of this structure.

| Condition table | block_list |
|---|---|
| Block_list | block |
| | \|block_list block |
| Block | block_head line_list |
| Block_head | [identifier] |
| line_list | line |
| | \|line_list line |
| line: | identifier=identifier_list |
| identifier_list : | identifier |
| | \|identifier_list identifier |
| identifier: | [A-Za-z0-9] |

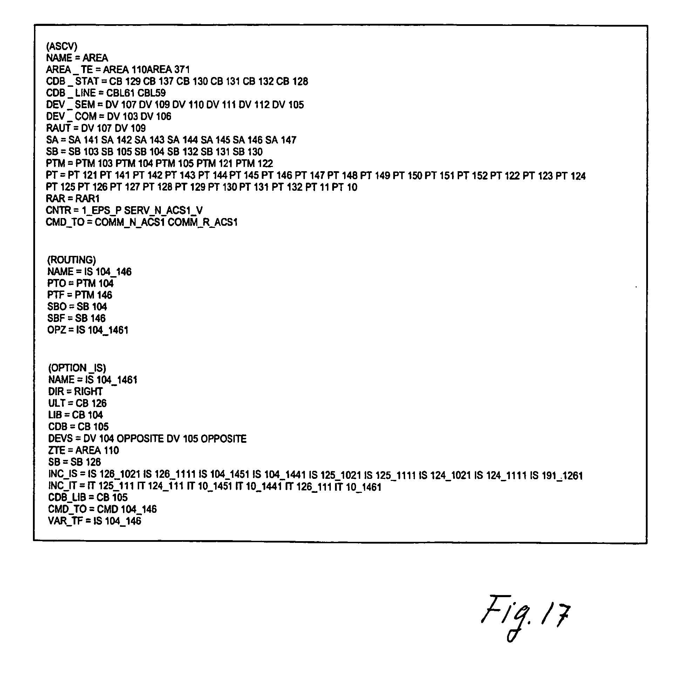

Fig. 17 comprises an example of a Condition Table file. In order to make the information intelligible by the Boolean equation system constituting both the control and command logical program to be tested and the logical simulator of the wayside equipments, of stations and/or of the areas, the condition table substantially includes the behaviour rules of the plant, that are rules for assuming the several operating states of wayside equipments in predetermined operation condition.

As already said before, the device allows not only to check the final behaviour of the control and command logical program on the station or area reproduced by Boolean simulators, but also to check the internal behaviour of equation system. This occurs by means of control windows that can be defined in relation to the number by the user himself. The user can assign any desired variables to each single control window. The program of the device keeps a chronology for each variable to allow the user to recall the preceding states by using control windows. The tool used to define control windows is a tool called "Views". Such tool allows the opening of a menu that comprises various options. An option is the Add Control Window command. The command is also accessible by a quick button indicated at 1210 in figures 5 and 6. This command allows to open a new control window. For each new control window it is required to specify a name that must be univocal and for the name definition a new dialog window is opened. A typical control window is illustrated in the figure and where it is indicated at 30. An open control window has a toolbar that functions to set variables to be displayed moving inside the chronology. Analogously to what already described before in other cases, commands are always accessible alternatively by a choice in a drop down menu or by means of quick buttons.

Add variable command or the quick button 130 allow to select variables to be controlled. It is possible to pre-select variables to be displayed by using a search dialog window.

The search dialog window provides various button that allow to perform functions such as to cancel the selection, to add a selected variable, to cancel one or more variables and to confirm the selected variables in the control window. It is also provided a button for cancel the current selection process.

By the Cancel Variable command or by the quick button 230, it is possible to remove a displayed variable from a control window. Even in this case, as in the preceding command a dialog window is displayed to execute the command and this window has buttons for activating specific functions such as Cancel, Cancel all, Close.

The Display Wave/Numerical Form command or quick buttons 330, 430 allow the selection of wave or numerical display modes of variable/variables which are displayed in the control window.

Analogously it is possible to provide commands or quick buttons to scroll or browse among the various possible control windows that are defined by the user.

The Cancel Control Window command or quick button 1310 cause the cancellation of a control window. In this case a dialog window is displayed wherein all the opened control windows are listed and among which it is possible to select the control window or windows to be eliminated, the cancellation being possible by means of a "Cancel" button.

A further command is the simulation command named View Activation of command Bar. The command bar can be activated and disabled by this command that is available also as quick button indicated at 1410 in fig. 6. To give commands to the simulator, the program displays a control window that is illustrated in figure 18. The control window is composed of a toolbar for commands and an area for messages, to display commands and modifications during the simulation execution. Quick commands in the shape of quick buttons are also available, drop down menu commands are also available for these commands as already provided for other commands.

By the simulation Mode command the user can select various options in a drop down menu. Among these options the following are important:

Single cycle option, that can be activated also by means of quick button 40. This option allows the execution of a single calculating cycle. After the execution the program automatically updates the message window and/or window/windows comprising the design/layout of the station or the area according to the new state.

Continuous cycle option accessible also by the quick button 41. In this case, the program starts to calculate in a continuous way cycle after cycle. During calculation, the message window and/or window/windows comprising the design/layout of the station are automatically updated.

Multiple cycle option. Even this option can be activated by a quick button 42. It is possible to specify a certain number of cycles to be calculated continually. The specification of the number of cycles is made by a dialog window wherein it is possible to indicate the desired number of cycles.

The calculation can be stopped in any moments by a stop command or a quick button 43.

Finally there is also a batch command or a quick button 44, with which a batch file is loaded and executed comprising an already made predetermined sequence of commands. The batch file execution is similar to a macro execution. As already said before, batch file commands have to be translate by a conversion table and must have a predetermined structure. Batch files can be edited by means of a text-editor such as Write® or Word-pad®.

The Image file Generation command or the quick button 45 allow to memorize the current state of simulation in a file so-called "snapshot". Snapshot file is saved by the user command with a name suggested by the program and including the date and the current hour.

The Reload Image file command or the quick button 46 allow to restore a specific simulation situation by calling up a snapshot file previously memorized. Obviously to select the snapshot file to be call up the program displays a dialog window wherein it is possible to select the desired snapshot file and open it.

By a restart command or a quick button 47 it is possible to restart the simulation. After a restart all the equation system variables and the simulator are set on value "0" and the cycle counter is reset. To start again the simulation it is necessary to execute a reset sequence of the normal state of wayside equipment simulators.

The User Commands command opens a drop down menu that allows to access the Commands Management and Variable Value Definition functions.

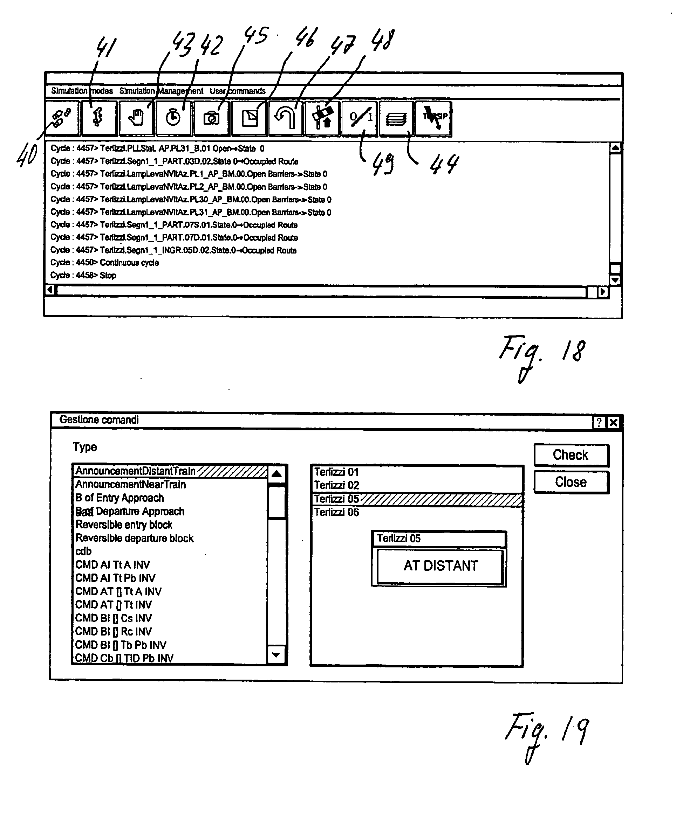

The command management can be call up also with a quick button indicated at 48. By this tool it is possible to modify simulator behaviour of each type of equipment (both physical and logic) by using the button associated to the control variables defined during the simulator configuration of equipments. To access the proper button the program displays the dialog window illustrated in figure 19. The list on the left of the dialog window includes the existing types of simulators. The user can display the simulators in the list of the dialog window by clicking with the mouse on the selected type. Simulators are identified by the first element of identification strings that has been specified during the simulator-variable association described before. It is possible to call up control buttons by clicking with the mouse on the desired simulator and by pressing a "control" function key.

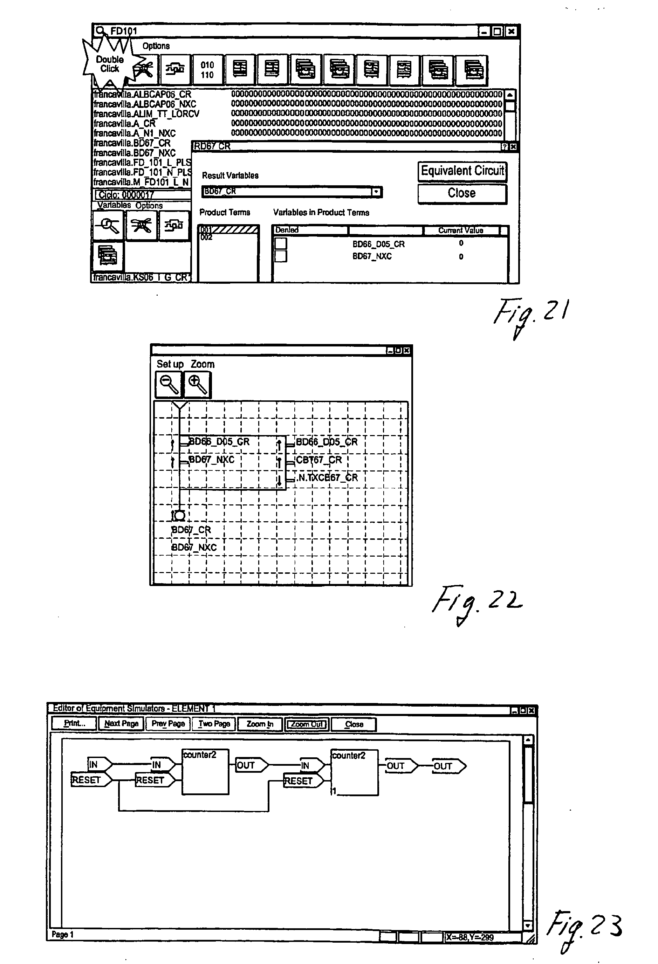

In alternative, by the user command menu it is possible to select the Variable Value Definition command. Also this command may be activate by a quick button indicated at 49. This command or this tool allow to set manually the variables used in the simulation. To select the variable a dialog window is display as the one illustrated in fig. 20.

The dialog window is very similar to the one used to select variables to be controlled. The selecting procedure is similar to that of " control of variables". To set the desired or proper value it is possible to use two choice options located in the bottom corner on the right of the window and selectable alternately "True/False".

The button indicated at 50 allows to activate the remote connection procedure to a remote unit.

According to a further feature and referring to figure 4, the state and colours of a graphic object in the layout of a station or of a zone or of a plant may be modified simply by clicking with the mouse on the graphic object in the drawing.

The example that takes cue from figure 4 uses the signal 05d circled in black and placed on the left side of the illustrated layout. The program displays a dialog window to set colours and state.

In this window is provided a "label" field containing the internal label of the graphic object extracted by the corresponding TGIF or CAD drawing file. The user cannot modify it. The content of this field is used to solve the "0" parametric components of forms. An "Auxiliary String" modification box allows to define the parametric components of forms. Each parameter must be separated by the "," character. The parameter indexing starts with 1, referred to the elements comprised in the auxiliary string. The string specification is not obligatory.

Additionally it is possible to use an "alias" modification box to specify the alias name of the specified object. The alias name is used to replace the label extracted from TGIF or CAD file when the program lists, in the command window, the objects that are changing their state during the simulation. In this modification box it is possible to input any character. The specification of alias names is not obligatory. The program prints the original labels in the command window when alias are not specified.

A "Type" list contains the colour and state tables previously defined. The user can select one of these. If the object has already a defined colour and state table, the list automatically highlights the current "type".

It is also possible to set the assignment for a graphic object by clicking with the mouse on a confirmation button. The setting of new colours and state occurs after the subsequent simulating cycle. If forms of a specific type cannot be found by using a specific label and the auxiliary string, the program sends an alert message and ignores the assignment.

Analogously to other functions already described, the dialog window comprises or may comprise other function buttons with a Cancel button that allows to cancel the assignment or Cancel that allows to ignore the assignment.

Referring to a further advantageous feature, the device according to the invention may comprise also a function for executing different automatic test backgrounds both on Boolean simulator tool and on the tool used for the final functional test of the plant. Obviously, the execution of this function allows the opening of a window that allows to select commands, options or to select graphic or control objects, analogously to what previously described for other functions.

With the starting of graphic interface constituted of said window, lists for selecting areas, type of equipments of the station plant are displayed together with corresponding data relevant to the station under test. The user must select an element inside each lists i.e. an area and a type of equipment. Now, the program provides to display values relevant to the equipment list of the selected equipment type of the selected area and the list of automatic tests which are available for the selected equipment type.

The user has the possibility of selecting one or more elements from the above lists i.e. selecting one or more equipments upon each of them one or more automatic tests can be executed. In each lists to each selection corresponds the display of the selected element in correlated lists. The correct selection that has been made respectively of an area, equipment type, equipment label and of the test label allows to start the execution of the test by means of a "Launch Test" button. The user is asked to confirm the test execution in a dialog window. If the response is affirmative, in the text box identificating the sigma "execution test" will be displayed the label of the current test and of the equipment that is object of the test, while in another list of the graphic interface will be displayed report messages.

After starting an automatic test, the button "Launch Test" label changes in "End Test", giving the possibility to stop in any moment the automatic test. After the stopping of a test, the button label changes again to "Launch Test" state. It is also possible to execute individually a single command.

An example of automatic test background is shown by the corresponding report file enclosed to **A1** to **A4** pages. The test is called "switch points on route (on routing)". During the test the covered switch points of a route firstly are locked in opposed position with respect to the one expected by the route itself. Then the test background, by commanding it more times, checks that the route does not block until all switch points are free. It should be noted that the complete test execution provides a series of other actions that are not subject of the present invention and that are not quoted for shortness reasons.

Referring to figure 1, the device according to the invention may be used in conjunction with another device called Boolean validating or checker.

In this case it is a hardware/software device, i.e. a computer or a personal computer that can be even the same computer of the device according to the present invention and wherein a program for executing the check of the control and command logical program is loaded, i.e. a checker of Boolean equations. The check program may be of the type operating according to a diversity principle. Particularly the Boolean checker may be composed of a comparator executing a comparison between the command and control logical program, which is in the test step in the device according to the invention, and a further control and command logical program which has been generated by generating means different from that during the test step. It is possible to execute the comparison both regarding the Boolean equation system of the two control and command logical programs and regarding the results of the simulating test executed for both the programs.

In case, even the programs simulating operating units, i.e. station equipments, areas or stations may be subjected to a similar diversity test with the help of the Boolean checker.

According to a preferred type of checker this is composed of an independent program that is executed on a different computer or on the same computer of the device according to the invention. This program executes in parallel the test of the Boolean equation system constituting the control and command logical program that is subjected to the check. In this case, the same logical program for controlling and commanding the railway plant is subjected to a dual check test by means of railway plant simulation according to what described above with two disjoint programs and the behaviour of the simulated plant obtained under the control of the control and command logical program in the two disjoint and parallel check tests is compared, error or alert files being generated in case of differences.

According to a further feature of the invention, for each of the Boolean equation of the equation system that compose the logical program for controlling and commanding the railway plant, it is possible to display both a list of product terms that are part of the displayed equation and the circuit corresponding to said displayed equation. Figures 21 and 22 show the window for selecting equations and the window for displaying a circuit corresponding to one of said equation. The selection and the opening of the corresponding circuit can be activated by buttons or by means of the mouse.

According to a further feature of the invention, the device comprises a program for designing and generating Boolean simulators of equipments or operating units that allows to generate new equipments with new behaviours.

Equipments can be composed of basic components, i.e. components for simulating a basic function and of complex components, i.e. a group of basic components operating in the sphere of an equipment simulator having a more elaborate structure.

A basic component may be created or selected by a list of existing components or crate. The basic component generating window is substantially similar to the one of figure 9. Obviously in figure 9 it is a component already generated or close to the generation. Analogously to what already said, a state table is generated wherein input variables, output variables, control ones and comments are defined. Variable values are selectable analogously to those provided for truth table and the provided functions are similar. The automaton illustrated on the left side of figure 9 (substantially similar to the one for generating the equipment simulator) is the Markov automaton, wherein states are represented by circles drawn along an horizontal line, by using distances calculated according to the description of the longer state. The description of the state is indicated by variables on the right of the circle, the state is composed by the local variable alias, the variable assuming the "false" condition being illustrated with a mark on it. On the contrary, state transitions are illustrated by arcs going from initial to final state and the direction of the state transition is indicated by an arrow upon the corresponding transition arc. By putting the mouse cursor upon the arrow of a transition arc are automatically displayed transition conditions as one or more input, control and output variable group. Circle and arcs colours are given in a different way depending on the configuration choices that have been set.

The individual basic components defined in such way can be combined or associated therebetween to form complex components, being interfaced therebetween by means of the indication of interfacing variables or input and output internal variables.

It is also possible to display a block diagram of the structure of the equipment simulator as appears in figure 23.

It is clear from what disclosed before and as results from figure 1 that the device according to the invention may be provided also as a device always existing in the system for controlling and commanding plants as a further non-vital node which can be activated both in emergency mode to execute periodical checks of the control and command logical program as well as backup unit or even as a device to modify and upgrade the control and command logical program when the system is modified with the removing or the addition of stations, areas or wayside equipments.

With regard to the device according to the invention it is generally clear that it may be employed in any plant having structural analogies with the described railway plant and that terms like station plant or plant area, operating unit and wayside equipment are similar terms.

The following pages show example of a test according to the tool for executing automatic test and include the report file of said test.

```
 proc Main { Istr } {
 global Error
 
 global Name
 global codResult1
 global codResult2
 global Step
 global ProgrAcq
 
 global ListDevsd
 global ListDevc
 global CompleteListCdb
 
 global FlgRr
 
 set Is [string length $Istr]
 set FlgOpz [string first "_OPZ" $Istr]
 
 if { SFlgOpz > 0 } {
 set ld [expr $ls - 5]
 } else {
 set ld [expr $ls - 2]
 }
 
 set IstrNoOpz [string range $Istr 0 $ld]
 
 # ------------------------------------------------ #
 #                                                  #
 #       READING DATA BASE ROUTING                  #
 #                                                  #
 # ------------------------------------------------ #
 
 # Reading the name starting pto
 set Pto [ Read CFG CTDC 0 IST $IstrNoOpz PTO ]
 
 # Reading the name of ending point of the routing
 set Ptf [Read CFG CTDC 0 IST $IstrNoOpz PTF }
 
 # Reading the name of S3 of the starting point of the routing
 set Sbo [Read CFG CTDC 0 IST $IstrNoOpz SBO ]
 
 # Reading the name of SB of the ending point of the routing
 set Sbf [Read CFG CTDC 0 IST $IstrNoOpz SBF ]
 
 # Reading if the starting point of the rout. requires the cdb occupation
 # (-existing of 'train presence on cdb' )
 set LibPto [Read CFG CTDC 0 PTM $Pto CLEARING ]
 
 # Reading the simple switch blocks of the routing
 set ListDevs [Read CFG CTDC 0 IST $Istr DEVS ALL ]
 
 # Reading the switch blocks for communicating the routing
 set ListDevc [Read CFG CTDC 0 IST $Istr DEVC ALL ]
 
 # Reading buffer stops
 set ListSfc [Read CFG CTDC 0 IST $Istr SFC ALL ]
 
 # Creating list of cdb to be covered to execute the train transit
 set CompleteCdbList [ CreateCompleteCdbList $Istr ]
 
 set Area [ GetArealstr $Pto ]
 set DataEqu [ ReadCFG CTDC C ASCV $Area DATA_
 set DataTdc [ ReadCFG CTDC 0 ASCV $Area DATA_
 
 if { [ llenght SDataEqu ] > 0 } {
  Message2 "Data Equations : $DataEqu"
 
 if { [ llenght SDataTdc ] > 0 } {
  Message2 "Data tdc : SDataTdc"
  Message2 " "
 }
 
 # ----------- #
 #             #
 #    STEP 1   #
 #             #
 # ----------- #
 
 ### Blocking switch points in opposite position than the TDC
 #
 Message " Blocking switch points in clashing position than the TDC "
 # Command levers in clashing position
 PositionClashingList $Istr $ListDevs DEVS
 # Command levers in clashing position
 PositionClashingList $Istr $ListDevc DEVC
 # Command in clashing position
 # PositionClashingList $Istr SListSfc SFC
 #
 ###
 
 set ProgrAcq 1
 set FlgRr "F"
 ### Checking if switch points are at state : clashing FREE CONTROL
 #
 Message "Check switch points in state < clashing FREE CONTROL >"
 # Checking cashing position
 CheckPositionClashingList $Istr $ListDevs DEVS FREE CONTROL
 CheckPositionClashingList $Istr $ListDevc DEVC FREE CONTROL
 # CheckPositionClashingList $Istr $ListSfc SFC FREE CONTROL
 #
 ###
 
 Message "Commanding Routing $Istr"
 if { $FlgOpz > 0 } {
 Command TF 0 IST $IstrNoOpz COMMAND OPZ
 } else {
 Command TF 0 IST $IstrNoOpz COMMAND ""
 }
 # Check current state of the routing.
 set Name $Istr
 set codResult1 "1"
 set codResult2 "2"
 set Step 1
 set ProgrAcq 1
 set FlgRr "T"
 CheckStateIstr REST TRUE RECORDED FALSE "" "" $Pto $Ptf
 
 # Getting the name of the last switch point of the routing
 set ListDevIstr [ concat $ListDevs $ListDevc $ListSfc ]
 set NameLastDev [ lindex $ListDevistr [ expr [llenght $ListDevistr] - 1] ]
 
 ### Loop for all the switch points
 #
 set Step 2
 set ProgrAcq 0
 if { [ llength $ListDevs ] > 0 } {
 foreach NameDev $ListDevs {
   # Commanding switch point in central position (AUTOMATIC)
   Message "Commanding switch point $NameDev in AUTOMATIC position"
   Command TF 0 DEV $NameDev AUTOMATIC ""
 
   Message "Commanding Routing $Istr"
   if { $FlgOpz > 0 } {
     Command TF O IST $IstrNoOpz COMMAND OPZ
   } else {
     Command TF 0 IST $IstrNoOpz COMMAND ""
   }
 
   set ProgrAcq [expr $ProgrAcq + 1]
   if {$NameDev == $NameLastDev } {
     Message "Checking if the switch is in position < concordant BLOCKED CONTROL > "
     CheckSwitchPointState $Istr DEVS $NameDev CONCORDANT BLOCKED CONTROL
   } else {
     Message "Checking if the switch is in position < concordant FREE CONTROL > "
     CheckSwitchPointState $Istr DEVS $NameDev CONCORDANT FREE CONTROL
   }
   set ProgrAcq [expr $ProgrAcq + 1 ]
   Message "Checking routing state"
   # Check current routing state
   # Controlling if it is the last one
   if { $NameDev == $NameLastDev } {
   v set codResult1 "3"
     set codResult2 "4"
     CheckIstrState PO_BLOCKED TRUE RECORDED TRUE "" "" SPto SPtf
   } else {
     set codResult1 "1"
     set codResult2 "2"
   } CheckIstrState REST TRUE RECOREDED FALSE "" "" $Pto $Ptf
  }
 }
 set tmpDev "-"
 
 if { [ llength $ListDevs ] > 0 } {
  foreach NameDev $ListDevc {
   if { $tmpDev = $NameDev } {
     # Commanding switch point in central position (AUTOMATIC)
     Message "Commanding switch point $NameDev in AUTOMATIC position"
     Command TF 0 DEV SNameDev AUTOMATIC ""
     Message "Commanding Routing $Istr"
     if { SFlgOpz > 0 } {
       Command TF 0 IST SIstrNoOpz COMMAND OPZ
     } else {
       Command TF 0 IST $IstrNoOpz COMMAND ""
     }
     set ProgrAcq [expr $FrogrAcq + 1 ]
     if {$NameDev == $NameLastDev } {
       Message "Checking if the switch is in position < concordant BLOCKED CONTROL > "
       CheckSwitchPointState $Istr DEVC $NameDev CONCORDANT BLOCKED CONTROL
     } else {
       Message "Checking if the switch is in position < concordant FREE CONTROL > "
       CheckSwitchPointState $Istr DEVC $NameDev CONCORDANT FREE CONTROL
     }
     set ProgrAcq [expr $ProgrAcq + 1 ]
     Message "Checking routing state"
     # Check current routing state
     # Controlling if it is the last one
     if {$NameDev == $NameLastDev } {
       set codResult1 "3"
       set codResult2 "4"
       CheckIstrState PO_BLOCKED TRUE RECOREDED TRUE "" "" SPto $Ptf
     } else {
       set codResult1 "1"
       set codResult2 "2"
       CheckIstrState REST TRUE RECOREDED FALSE "" "" $Pto SPtf
     }
   } set tmpDev $NameDev
  }
 }
 set ccdResult1 "10"
 set ProgrAcq [expr $ProgrAcq + 1 ]
   ### Checking low signal state starting point
   #
   Message" Checking low signal state starting point "
   if { [ check DAS 0 SB $Sbo FREEROUTE TRUE 3 0 ] == "TRUE" } {
     Message " CHECK OK : The low signal $Sbo is FREE TRANSIT"
     PrintRealRisults $Name $Sbo $codResult1 $Step $ProgrAcq
   } else {
     set error "1"
     Message " CHECK FAILED " : The low state $Sbo is not FREE TRANSIT"
     if { $FlgRr == "T" } {
        set ECcdResult "E"
        append ECodResult $codResult1
        PrintRealRisults $Name $Sbo $codResult $Step $ProgrAcq
     }
   }
   #
 
   # ----------- #
   #             #
   #    STEP 2   #
   #             #
   # ----------- #
```

## Claims

1. A device for checking logical software engines for controlling and commanding plants, particularly railway plants, particularly station plants, comprising at least a computer with at least a central processing unit and at least a memory for loading and executing programs:
a logical engine for commanding a plant, particularly a station plant, being loaded or loadable in said memory for its execution, which plant comprises a plurality of operating units for actuating and/or detection and/or measurement and/or signalling, so-called wayside equipments, which units are provided for receiving command signals and for transmitting control signals about the operating condition, and which logical software engine reads control signals given by the operating units for actuating and/or detection and/or measurement and/or signalling and it processes command signals of said operating units basing on an operation protocol of the plant itself,
**characterised in that**
in the computer memory a plant software simulation program that is to be controlled and commanded by the control and command logical program is loaded or loadable and it is executable by the computer itself and which simulation program reproduces exactly the plant structure and the operating modes of operating units provided in said plant.

2. A device according to claim 1, **characterised in that** the simulation of plant structure and of operating units associated thereto, such as track circuits to detect the presence of the train, switch points actuators, signalling actuators and other different units is represented in the simulation program by Boolean algorithms, variables associated to said algorithms being univocally defined to represent the control signals of various state or operation conditions of several operating units and the command signals for commutating and/or maintaining the state or operating conditions of said several operating units.

3. A device according to claims 1 or 2, **characterised in that** means for displaying the image of plant behaviour are provided under the control of the control and command logical program as variable lists univocally associated to various operating units as report files wherein various operating units and the associated state or command variables are listed.

4. A device according to one or more of the preceding claims, **characterised in that** the simulation program comprises means for setting starting operating conditions of the plant and/or even anomalous setting situations of plant operating units to check the reaction of the plant to these conditions.

5. A device according to one or more of the preceding claims, **characterised in that** to each plant operating unit and/or to each important structural element and/or at least to one or more areas of the plant and/or to the whole plant can be univocally associated a virtual image of the operating unit and/or of the plant structural element and/or of the area or areas of the plant and/or of the whole plant which image is generated by a graphic program loaded or loadable and/or executable by the computer of the device and which virtual image is univocally correlated to the logical program for simulating the operating unit or the plant structural element or the area or areas of the plant or the whole plant, the graphic program for generating the virtual image of each operating unit and/or of each area and/or of the plant being such to generate several graphic aspect conditions of the operating unit, of the area or of the whole plant each of them is univocally correlated to a predetermined value of variables relevant to the operating condition of the operating unit or of the area or of the plant and/or of command variables for commutating or maintaining the operating state of the operating unit or of the area or of the plant.

6. A device according to one or more of the preceding claims, **characterised in that** the operation of the control and command logical program is further represented, in parallel or alternatively, as behaviour of the equivalent command hardware logic composed of a relay network, a program for simulating relay operation and a program for simulating relay network operation being provided, as well as graphic programs for representing relays univocally associated to each relay simulation program and to relay network graphic representation program.

7. A device according to claim 6, **characterised in that** each relay is simulated by a logical program of Boolean type, single state conditions of relays and/or commutation commands being represented by state or command variables and graphic programs being such to associate several relay graphic aspects univocally correlated to values assumed by said state or command variables.

8. A device according to one or more of the preceding claims, **characterised in that** it has means for scheduling and configuring images and/or state and command variable lists of virtual operating units corresponding to the desired or correct operation or state condition of the plant in conjunction with a predetermined operation situation, by providing means for checking, directly and visually, a correct operation in conjunction with automatic check means basing on the comparison between the nominal image and the nominal table or list of desired state and command variables previously scheduled and the image and state and command variables really processed during the operation of the control and command logic with the station plant virtual model, an error message being sent in case of non-identity.

9. A device according to claim 8, **characterised in that** it has means for displaying graphically and/or analytically the operating unit or units that have assumed a non-correct condition and the corresponding state or command variable or variables.

10. A device according to claims 8 or 9, **characterised in that** the automatic check means analyse even the simulated representation means of the relay network, indicating which relay or relays have not been commutated in the correct condition and the corresponding commutation state or command variables.

11. A device according to one or more of the preceding claims, **characterised in that** it provides automatic means that correct the control and command logical program basing on the possible corrections made by the user to state or commands variables manually modified in the presence of a state or command error of a virtual operating unit or of a relay in the corresponding command logical circuit formed by the plant or network relay virtual model.

12. A device according to one or more of the preceding claims, **characterised in that** the modification means allow modification interventions both of alphanumeric type executed on report files of state or command variables, and interventions for graphically modifying the aspect of the operating unit or the relay corresponding to the state of said operating unit or of said relay, whereas analyse and interpretation means are provided which analyse state or command variable values manually set to correct the wrong values, analyse the control and command logical program and modify the code to commute the operating unit or relay in the correct state condition when the operation condition occurs with which the control and command logical program had previously generated the error.

13. A device according to one or more of the preceding claims, **characterised in that** it comprises means for associating operating units and plant structural elements to generate or to find areas of virtual station plant and the corresponding parts of the control and command logical program having typical plant structures that recur in several station plants, so as to load and reuse both the Boolean simulation programs, and graphic display programs as well as parts of control and command logical programs in new station plants having equal station areas.

14. A device according to one or more of the preceding claims, **characterised in that** it has means for connecting and interfacing with validation and certification means based on the diversity of the program for generating the control and command logical program, such as a so-called Boolean algorithms checker.

15. A device according to claim 14, **characterised in that** the Boolean checker comprises an additional program for generating the control and command logical program generated or memorized in the Boolean checker which additional control and command logical program is generated through means different than the one during the test step by means of plant simulation and means for comparing the additional control and command logical program generated or memorized in the Boolean checker with the control and command logical program during the test step by means of plant simulation to notice the identity between the two control and command logical programs.

16. A device according to claim 15, **characterised in that** the comparison occurs at the Boolean equation system of the control and command logical program generated or memorized in the Boolean checker and at the control and command logical program during the test step by means of simulation of the plant.

17. A device according to claims 15 or 16, **characterised in that** the comparison occurs according to text reports by means of plant simulation of the control and command logical program during the test step and of the additional control and command logical program generated and/or memorized in the Boolean checker means being provided means for comparing command and state variables of operating units and relays of the virtual relay network both from the numeric perspective and the graphic perspective.

18. A device according to claim 17, **characterised in that** it comprises means the displaying, in a combined way, of graphic images of plant state conditions obtained with the two control and command logical programs.

19. A device according to claim 18, **characterised in that** it comprises means for displaying, in an overlap way, plant layout images according to the two control and command logical programs, in which overlapping of the plant state condition image the possible differences are graphically highlighted in a visually relevant way.

20. A device according to one or more of the preceding claims 15 to 19, **characterised in that** the two comparison modes at the Boolean equation system and at report files of the test of control and command logical programs with the virtual plant are executed sequentially, the result of the first comparison being a means to identify the operating unit and/or the plant area and/or the Boolean equations wherein a difference has been noticed and it must be subjected to the second comparison step.

21. A device according to claim 20, **characterised in that** the comparison relevant to plant conditions obtained by the two control and command logical programs is firstly executed and therefore it is identified on which parts of the program the comparison actions can be limited with regard to the Boolean equation system to determine possible actions to correct the same or the debugging.

22. A device according to one or more of the preceding claims 15 to 21, **characterised in that** the Boolean checker analyses, basing on diversity, even logical programs for simulating the single operating units and/or the plant areas and/or the plant and/or the logical programs for simulating relays or relay network extending such check action, based on the diversity, of the generating program even to programs for graphically representing operating units or relays.

23. A device according to one or more of the preceding claims, **characterised in that** it comprises a network interface and it may constitute a non-vital node of the railway plant, being a means for quickly modifying the control and command logical program and for virtually validating the same, for instance in case of a structural modification of the plant by eliminating or adding plant elements.

24. A device according to claim 23, **characterised in that** said device, alternatively or in conjunction, is a diagnostic or supervisory tool of the correct operation of the real station plant, being provided a comparator between the state condition that has been assumed by the real plant and the one that has been assumed by the simulated plant.

25. A device according to claims 23 or 24, **characterised in that** it is device for simulating emergency interventions before their application to the real plant, in the emergency event being possible to simulate several intervention or command possibilities of the plant to execute on the plant itself the among the possible choices the one that is the best solution.

26. A device according to one or more of the preceding claims, **characterised in that** it comprises tools for executing simulating functions with a user interface of the type used by the Windows ® program soft Inc. and therefore it comprises operating windows with function buttons, quick choice menus and other functionalities typical of said interface, in addition obviously to the use of mouse or of other pointers, selection and command input systems and the keyboard to input numerical data, such as to create or modify graphic images of operating units and/or of relays or of other parts of the plant structure.

27. A device according to one or more of the preceding claims, **characterised** on that it provide means for setting specific operating conditions of the plant or of anomalous situations and for checking the plant reactions referring to several operating environment.

28. A device according to claim 27, **characterised in that** manually setting means are means provided by the personal imposing at the starting of the cycle for executing control and command logical program specific state conditions to the several operating units, being possible to provide by means of suitable scheduling even conditions wherein one or more operating units are not operating or operate in a anomalous way.

29. A method for checking software logical engines for controlling and commanding plants such as railway plants, particularly station plants, comprising at least a central processing unit and at least a memory for loading and executing programs:
a logical engine for commanding a plant, particularly a station plant, being loaded or loadable in said memory for its execution, which plant comprises a plurality of actuating and/or detection and/or measurement and/or signalling operating units, so-called wayside equipments, which units are provided for receiving command signals and transmitting control signals as regards the operating condition, and which logical software engine reads control signals given by the actuating and/or detection and/or measurement and/or signalling operating units and it processes command signals of said operating units basing on an operating protocol of the system itself,
**characterised in that**
in the computer memory a program for software simulating the plant that must be controlled and commanded by the control and command logical program is loaded or loadable and it can be executed by the computer itself and which simulating program reproduces exactly the plant structure and the operating modes of operating units provided in said plant.

30. A method according to claim 29, **characterised in that** the simulation of the plant structure and of the operating units associated thereto, such as track circuits to note the train presence, switch points actuators, signalling actuators and other different units is represented in the simulating program by Boolean algorithms, variables associated to said algorithms being univocally defined to represent control signals of various state or operation conditions of various operating units and commutation command signals of state or operating conditions of said various operating units and/or the maintenance thereof.

31. A method according to claims 29 or 30, **characterised in that** the image of the behaviour of the virtual plant under the control of the control and command logical program is displayed as variables list univocally associated to various operating units as report files wherein various operating units and associated state or command variables are listed.

32. A method according to one or more of the preceding claims 29 to 31, **characterised in that** it provides the setting by the user of starting operating conditions of the plant and/or even anomalous setting situations of plant operating units to check the reaction of the plant to these conditions.

33. A method according to one or more of the preceding claims 29 to 32, **characterised in that** a virtual image of the operating unit and/or the plant structural element can be univocally associated to each plant operating unit and/or to each relevant structural element which image is generated by a graphic program loaded or loadable and/or executable by the computer and which virtual image is univocally correlated to the simulating logical program of the operating unit or of the plant structural element the graphic program for generating the virtual image of each operating unit being such to generate several conditions of graphic aspects of the operating unit, each of them is univocally correlated to a predetermined value of variables relative to the operating condition of the operating unit and/or commutation or maintenance command variables of the operating state of the operating unit itself.

34. A method according to claim 33, **characterised in that** the operation of the control and command logical program is further represented in parallel or alternatively as behaviour of the equivalent command hardware logic composed of a relay network, being provided a simulating program of relays operation and a simulating program of relay network operation, as well as graphic programs for representing relays univocally associated to each relay simulation program and relay network graphic representation program.

35. A method according to claim 34, **characterised in that** each relay is simulated by a logical program of Boolean type, individual state conditions of relays and/or commutation commands being represented by state or command variables and graphic programs being such to associate several graphic aspect of relays univocally correlated to values assumed by said state or command variables.

36. A method according to one or more of the preceding claims, **characterised in that** the display of the functional behaviour of the plant is executed according to two modes and i.e. in the shape of report file that displays values of state variables generated by the programs processed by the simulation logical programs of operating units and in the shape of graphic representation of the operating condition of operating units allowing to check in details the operating units of the plant and therefore the operation modes thereof both in an analytic way and in a direct visual way of the physical operation condition.

37. A method according to one or more of the preceding claims, **characterised** on that it provide means for setting specific operating conditions of the plant or of anomalous situations and for checking the plant reactions referring to several operating environment.

38. A method according to claim 37, **characterised in that** settings can be executed by the personal imposing at the starting of the cycle for executing the control and command logical program specific state conditions to the several operating units, being possible to provide by means of suitable scheduling even conditions wherein one or more operating units are not operating or operate in a anomalous way.

39. A method according to claim 37, **characterised in that** it provides the scheduling and the configuration of images and/or state and command variables of virtual operating units corresponding to the desired or correct operation or state condition of the plant in conjunction with a predetermined situation of operation and the execution of the direct and visual check of correct operation as well as the execution of an automatic check based on the comparison between the nominal image and the nominal table or list of desired state and command variables previously scheduled and the image and state and command variables really processed during the operation of the control and command logic with the station plant virtual model, an error message being sent in case of non-identity.

40. A method according to claim 39, **characterised in that** the automatic check provides graphic and/or analytic display of the operating unit that has assumed a non-correct condition and the corresponding state or command variable or variables and/or graphic and/or analytic display of state variables of the relay network simulated.

41. A method according to one or more of the preceding claims 9 to 40, **characterised in that** it provides automatic tools correcting the control and command logical program depending on possible corrections made by the user to state or command variables manually modified in the presence of a state or command error of a virtual operating unit or of a relay in the corresponding command logic circuit constituted by the relay network virtual model.

42. A method according to claim 41, **characterised in that** it provides the execution of modification interventions both of alphanumeric type executed on report files of state or command variables, or graphic interventions for modifying the aspect of the operating unit or of the relay corresponding to the state of said operating unit or of said relay said data being interpreted by a correction program that analyses state or command variables values manually set to correct those wrong, and that analyses the control and command logical program and modifies the colour to commutate the operating unit or the relay in the correct state condition with the same operation condition in presence of which the control and command logical program had previously generated the error.

43. A method according to one or more of the preceding claims, **characterised in that** it provides the read in of areas of the virtual station plant and the corresponding parts of the control and command logical program having typical plant structures that recur in various station plants, to load and reuse both Boolean simulation programs, and graphic display programs as well as parts of the control and command logical program in new station plants having equal station areas.

44. A method according to one or more of the preceding claims, **characterised in that** it provides the alternative or parallel execution of a check of the control and command logical program during the test step with the plant simulator by means of a Boolean checker that generates with diversity principles, or wherein is memorized, a control and command logical program generated with diversity principles and that compares the control and command logical program during the test step by means of virtual plant simulation with the one generated with diversity criterions.

45. A method according to claim 44, **characterised in that** it provides a further program for generating the control and command logical program object of test by means of plant simulation, which generating program operates according to a code different from that with which has been generated the control and command logical program during the test by means of virtual plant, the two control and command logical programs being compared by the Boolean checker to identify difference in the Boolean equation system.

46. A method according to claim 44, **characterised in that** in addition or alternatively the control and command logical program generate by the checker or memorized therein is subjected to a test step by means of virtual plant, being compared the results obtained by the two control and command logical programs.

47. A method according to one or more of claims 44 to 46, **characterised in that** it provides the display, both in the shape of comparative tables of variables and in the shape of graphic comparisons, of the operation differences of the two control and command logical programs generated according to diversity criterions and/or of the two relay networks corresponding to the two Boolean equation systems, being highlighted the variables and the graphic states respectively that are different one with respect to the other both in the variable comparison and in the graphic comparison.

48. A method according to claim 47, **characterised in that** it provides the overlap of graphic images of the plant state conditions obtained by the two control and command logical programs, being graphically highlighted the possible differences in this overlap of the image of the plant state condition.

49. A method according to one or more of claims 44 to 48, **characterised in that** it provide the execution alternative or in turn of the two modes for comparing the two control and command logical programs at the Boolean equation system and at the result of the test execution on the simulated virtual plant being also possible to modify the sequence order of the two different comparison modes.

50. A method according to claim 49, **characterised in that** it provides the following comparison steps:
Firstly executing the comparison in relation to the plant conditions obtained by the two control and command logical programs;
Basing on said comparison identifying on which parts of the program the subsequent comparison actions can be limited;
Executing the comparison in relation to the Boolean equations of the two control and command logical programs only for the equations that caused the functional divergences that have been found in the first comparison step;
therefore executing the possible correction actions thereof or the debugging enquires (error detection) on said Boolean equations identified as responsible for the different behaviour of the plant.

51. A method according to one or more of the preceding claims 44 to 50, **characterised in that** the actions for the comparison with a program generated according to a different generating code are executed also in relation to logical programs for simulating the individual operating units and the plant structure as well as at logical programs for simulating relays and relay network and in case such check action may be also extended to the graphic representation programs of the operating units or of relays.

52. A method according to one or more of the preceding claims 44 to 51, **characterised in that** it comprises parallel means for certificating the control and command logical program consisting in a further independent program that executes in parallel the test of the same Booleans equation system constituting the control and command logical program to execute a double test by means of the railway plant simulation, the behaviour of the simulated plant obtained under the control of the control and command logical program in the two separated and parallel check tests being compared and alert or error files being generated in case of difference.

53. A method according to one or more of the preceding claims 44 to 52, **characterised in that** it comprises a step for operating connection to devices or remote networks to command the test functions form a remote workstation and/or to execute alternative functions as functions of non vital node of railway plant.

54. A method according to claim 53, **characterised in that** it is used for a modification to update a control and command logical program and for the virtual functional test thereof in case of structural modification of the plant.

55. A method according to claims 51 to 54, **characterised in that** it is used for the supervision or the diagnostic of the correct operation of the real station plant, by executing a comparison between the state condition assumed by the real plant and that assumed by the simulated plant.

56. A method according to one or more of the preceding claims 50 to 55, **characterised in that** it is used as a virtual emergency simulator for intervention or command possibility of the real plant to realize on the plant itself only the choice that offers the best solution among the possible choices.

57. A method according to one or more of the preceding claims 29 to 55, **characterised in that** it comprises a program for executing simulation functions with an user interface of the type used by Windows ® program by Microsoft Inc. and hence comprising operating windows with function buttons, quick choice menus and other functionalities typical of said interface, in addition obviously to the use of the mouse or of other pointing means, selection and inputting of commands and the keyboard to input numerical, alphanumerical data, and/or numerical or alphanumerical commands, such as also to create or modify graphic images of operating units and/or of relays or of other parts of the plant structure.

58. A program for a computer provided to verify a logical program for controlling and commanding a plant, particularly railway plant by means of application on a simulated railway plan that is provided to execute the method steps according to one or more of the preceding claims 29 to 57 or to be loaded in the computer to form a device according one or more of the preceding claims 1 to 28.

## Patentansprüche

1. Einrichtung zur Prüfung logischer Software Engines für Steuer- und Befehlsanlagen, insbesondere Bahnanlagen, insbesondere Bahnhofsanlagen, aufweisend zumindest einen Computer mit zumindest einer zentralen Recheneinheit und mindestens einem Speicher zum Laden und Ausführen von Programmen, wobei
eine logische Engine zum Anweisen einer Anlage, insbesondere einer Bahnhofsanlage, in dem Speicher für deren Ausführung geladen wird oder ladbar ist, wobei die Anlage eine Vielzahl von Betriebseinheiten zum Aktivieren und/oder Erkennen und/oder Messen und/oder zur Signalgebung, die so genannte Streckenausrüstung, aufweist und die Einheiten zum Empfangen der Befehlsignale und zum Übermitteln der Steuersignale gemäß der Betriebsbedingung vorgesehen sind und die logische Software Engine Steuersignale ausliest, die von den Betriebseinheiten zum Aktivieren und/oder zum Erkennen und/oder zum Messen und/oder zur Signalgebung ausgegeben werden und die logische Software Engine die Befehlsignale der Betriebseinheiten auf Basis eines Betriebsablaufprotokolls der eigentlichen Anlage verarbeitet,
**dadurch gekennzeichnet, dass**
in dem Computerspeicher ein Softwarebetriebssimulationsprogramm, welches von dem logischen Steuer- und Befehlsprogramm gesteuert und befohlen wird, geladen wird oder ladbar ist und von dem Computer selbst ausführbar ist, wobei das Simulationsprogramm die exakte Anlagenstruktur und die Betriebsarten der Betriebseinheiten, welche in der Anlage vorgesehen sind, wiedergibt.

2. Einrichtung nach Anspruch 1,
**dadurch gekennzeichnet, dass**
die Simulation der Anlagenstruktur und der damit verbundenen Betriebseinheiten wie Streckenschaltungen, welche die Präsenz der Züge erfassen, Weichenstellern, Signalausgabeeinheiten und anderen diversen Einheiten in dem Simulationsprogramm durch boolesche Algorithmen wiedergegeben werden, wobei Variablen, die mit den Algorithmen verknüpft sind, eindeutig definiert sind, um die Steuersignale verschiedener Status- und Betriebsbedingungen mehrerer Betriebseinheiten und die Befehlssignale zum Verändern und/oder Aufrechterhalten des Status der Betriebseinheiten von verschiedenen Betriebseinheiten wiederzugeben.

3. Einrichtung nach Anspruch 1 oder 2
**dadurch gekennzeichnet, dass**
Mittel zum Darstellen einer Abbildung des Anlagenverhaltens vorgesehen sind, gesteuert durch das logische Steuer- und Befehlsprogramm, indem Variablenlisten vorgesehen sind, die eindeutig mit verschiedenen Betriebseinheiten als Berichtsdateien verknüpft sind, in denen verschiedene Betriebseinheiten und die verknüpften Status- oder Befehlsvariablen aufgelistet sind.

4. Einrichtung nach einem oder mehreren der vorangehenden Ansprüchen,
**dadurch gekennzeichnet, dass**
das Simulationsprogramm Mittel zum Einstellen der Startbetriebsbedingungen der Anlage und/oder auch anormale Einstellungssituationen der Betriebseinheiten der Anlage aufweist, um die Reaktion der Anlage auf diese Bedingungen zu überprüfen.

5. Einrichtung nach einem oder mehreren der vorangehenden Ansprüchen,
**dadurch gekennzeichnet, dass**
zu jeder Betriebseinheit der Anlage und/oder zu jedem wichtigen Strukturelement und/oder wenigstens zu einem oder mehreren Bereichen der Anlage und/oder zu der gesamten Anlage eine virtuelle Abbildung der Betriebseinheit und/oder des strukturellen Elementes der Anlage und/oder des Bereiches oder der Bereiche der Anlage und/oder der gesamten Anlage eindeutig verknüpft werden kann, wobei das Bild von einem graphischen Programm erstellt wird, das geladen oder ladbar und/oder von dem Computer der Einrichtung ausführbar ist und wobei das virtuelle Bild eindeutig mit dem logischen Programm korreliert zum Simulieren der Betriebseinheit oder des strukturellen Elementes der Anlage oder des Bereichs oder der Bereiche der Anlage oder der gesamten Anlage, das graphische Programm zum Erzeugen der virtuellen Abbildung jeder Betriebseinheit und/oder jedes Bereichs und/oder der Anlage einer solchen Art ist, dass mehrere graphische Darstellungsbedingungen der Betriebseinheit erzeugt werden, des Bereiches oder der gesamten Anlage, wobei jedes dieser eindeutig zu einer vorbestimmten Anzahl von Variablen korrelieren, die zu den Betriebsbedingungen der Betriebseinheiten oder des Bereiches oder der Anlage und/oder der Befehlsvariablen zum Umschalten oder Aufrechterhalten des Status der Betriebseinheit oder des Bereiches oder der Anlage relevant sind.

6. Einrichtung nach einem oder mehreren der vorangehenden Ansprüche,
**dadurch gekennzeichnet, dass**
der Betrieb des logischen Steuer- oder Befehlsprogramms ferner, parallel oder alternativ, als Verhalten der entsprechenden Befehlshardwarelogik dargestellt ist, aufgebaut aus einem Schaltrelaisnetzwert, einem Programm zum Simulieren des Betriebs der Schaltrelais und einem Programm, das zum Simulieren des Betriebs des Schaltrelaisnetzwerkes vorgesehen ist sowie graphischen Programmen zum Darstellen der Schaltrelais, die eindeutig mit jedem Schaltrelaissimulierungsprogramm und dem graphischen Darstellungsprogramms des Schaltrelaisnetzwerkes verknüpft sind.

7. Einrichtung nach Anspruch 6,
**dadurch gekennzeichnet, dass**
jedes Schaltrelais von einem logischen Programm boolescher Art simuliert wird, wobei einzelne Statusbedingungen der Schaltrelais und/oder Umschaltbefehle durch Status- und Befehlvariablen dargestellt werden und die graphischen Programme einer solchen Art sind, dass mehrere graphische Erscheinungen der Schaltrelais eindeutig mit den Werten, die von den Status- und den Befehlsvariablen vorgegeben werden, verknüpft sind.

8. Einrichtung nach einem oder mehreren der vorangehenden Ansprüchen,
**dadurch gekennzeichnet, dass**
die Einrichtung Mittel zum Festlegen und zum Gestalten von Abbildungen und/oder Status- und Befehlsvariablenlisten virtueller Betriebseinheiten entsprechend gewünschter oder korrekter Betriebs- oder Statusbedingungen der Anlage im Zusammenhang mit einer vorher festgelegten Betriebssituation aufweist, und zwar durch das Vorsehen von Mitteln zum direkten und visuellen Überprüfen eines korrekten Betriebsablaufes in Verbindung mit einer automatischen Überprüfungseinheit, auf Basis des Vergleichs zwischen der nominalen Darstellung und der nominalen Tabelle oder Liste der im Voraus geplanten gewünschten Status- und Befehlsvariablen mit der Abbildung und den Status- und Befehlsvariablen, die tatsächlich im Betrieb der Steuerungs- und Befehlslogik in dem virtuellen Bahnhofsanlagenmodell entwickelt wurden, wobei im Falle von Nicht-Gleichheit eine Fehlermeldung gesendet wird.

9. Einrichtung nach Anspruch 8,
**dadurch gekennzeichnet, dass**
die Einrichtung Mittel zum graphischen und/oder analytischen Darstellen der Betriebseinheit oder -einheiten aufweist, die eine nicht korrekte Bedingung und die entsprechende Status- oder Befehlsvariable oder -variablen angenommen haben.

10. Einrichtung nach dem Anspruch 8 oder 9,
**dadurch gekennzeichnet, dass**
die automatische Überprüfungseinheit auch die simulierte Darstellungseinheit des Schaltrelaisnetzwerkes analysiert und anzeigt, welches Schaltrelais oder welche Schaltrelais noch nicht in die korrekte Bedingung und die korrespondienenden Umwandlungsstatus- oder Befehlsvariablen umgeschaltet wurden.

11. Einrichtung nach einem oder mehreren der vorangehenden Ansprüchen,
**dadurch gekennzeichnet, dass**
die Einrichtung automatische Mittel bereitstellt, die das logische Steuer- und Befehlsprogramm korrigieren auf Basis der möglichen Korrekturen der Status- oder Befehlsvariablen ausgeführt von dem Benutzer, die beim Vorliegen eines Status- oder Befehlsfehlers einer virtuellen Betriebseinheit oder eines Schaltrelais in dem entsprechenden logischen Befehlsschaltkreis, der durch die Anlage oder das virtuelle Modell des Schaltrelaisnetzwerkes ausgebildet wird, manuell geändert werden.

12. Einrichtung nach einem oder mehreren der vorangehenden Ansprüchen,
**dadurch gekennzeichnet, dass**
die Änderungseinheiten Änderungseingriffe sowohl alphanumerisch ausgeführt in den Berichtsdateien der Status- oder Befehlsvariablen als auch Eingriffe zum graphischen Ändern des Aussehens der Betriebseinheit oder des Schaltrelais korrespondieren zu dem Status der Betriebseinheit oder der Schaltrelais ermöglichen, wobei Analysierungs- und Interpretationsmittel vorgesehen sind, welche die Status- oder Befehlsvariablen analysieren, die manuell zum Korrigieren der falschen Werte eingegeben worden sind, das logische Steuer und Befehlsprogramm analysieren und den Code zum Umschalten der Betriebseinheit oder der Schaltrelais in die korrekte Statusbedingung ändern, wenn die Betriebsbedingung auftritt, mit der das logische Steuer- und Befehlsprogramm zuvor den Fehler erstellt hat.

13. Einrichtung nach einem oder mehreren der vorangehenden Ansprüchen,
**dadurch gekennzeichnet, dass**
die Einrichtung Mittel zum Verknüpfen der Betriebseinheiten und der strukturellen Anlagenelemente aufweist, um Bereiche der virtuellen Bahnhofsanlage zu erzeugen oder zu finden und die entsprechenden Teile des logischen Steuer- und Befehlsprogramms, welches typische Anlagenstrukturen aufweist, die sich in mehreren Bahnhofsanlagen wiederholen, sowohl die booleschen Simulationsprogramme als auch die graphischen Darstellungsprogramme sowie Teile des logischen Steuer- und Befehlsprogramms in neuen Bahnhofsanlagen, die gleichartige Bahnhofsbereiche aufweisen, zu laden und wieder zu verwenden.

14. Einrichtung nach einem oder mehreren der vorangehenden Ansprüchen,
**dadurch gekennzeichnet, dass**
die Einrichtung Mittel zum Verbinden und Ankoppeln an Validations- und Zertifizierungseinrichtungen aufweist, basierend auf der Ungleichheit des Programms zum Erstellen des logischen Steuer- und Befehlsprogramms wie einem so genannten booleschen Algorithmus Überprüfer.

15. Einrichtung nach Anspruch 14,
**dadurch gekennzeichnet, dass**
der boolesche Überprüfer ein weiteres Programm zum Erzeugen des logischen Steuer- und Befehlsprogramms aufweist, das in dem booleschen Überprüfer erzeugt oder gespeichert ist, wobei das zusätzliche logische Steuer- und Befehlsprogramm durch Mittel erzeugt wird, die unterschiedlich von den Mitteln innerhalb der Testphase mit Hilfe einer Betriebssimulation sind und Mitteln zum Vergleichen
- des zusätzlichen Steuer- und Befehlsprogramms, erzeugt oder gespeichert in dem booleschen Überprüfer
- mit dem logischen Steuer- und Befehlsprogramm innerhalb der Testphase mit Hilfe einer Betriebssimulation,
um die Identität zwischen den zwei logischen Steuer- und Befehlsprogrammen festzustellen.

16. Einrichtung nach Anspruch 15,
**dadurch gekennzeichnet, dass**
der Vergleich in dem booleschen Gleichungssystem des in dem booleschen Überprüfer erzeugten und gespeicherten logischen Steuer- und Befehlsprogramms und in dem booleschen Befehlsprogramm während der Testphase durch die Simulation der Anlage erfolgt.

17. Einrichtung nach Anspruch 15 oder 16,
**dadurch gekennzeichnet, dass**
der Vergleich gemäß den Textberichten mittels
- der Betriebssimulation des logischen Steuer- oder Befehlsprogramms, während der Testphase, und
- des zusätzlichen logischen Steuer- und Befehlsprogramms, erzeugt und/oder gespeichert in der booleschen Überprüfungseinrichtung,
erfolgt, wobei Mittel zum Vergleichen der Befehls- und Statusvariablen der Betriebseinheiten und Schaltrelais des virtuellen Schaltrelaisnetzwerks sowohl aus der numerischen Perspektive als auch aus der graphischen Perspektive vorgesehen sind.

18. Einrichtung nach Anspruch 17,
**dadurch gekennzeichnet, dass**
die Einrichtung Mittel zum Darstellen der graphischen Abbildungen der Anlagenstatusbedingungen, die mit den zwei logischen Steuer- und Befehlsprogrammen erzielt werden, in Kombination aufweist.

19. Einrichtung nach Anspruch 18,
**dadurch gekennzeichnet, dass**
die Einrichtung Mittel zum Darstellen der Anlagenlageplandarstellungen gemäß der zwei logischen Steuer- und Befehlsprogramme in überlagernder Weise aufweist, wobei bei den Überlagerungen des Anlagenstatusbedingungsabbildes die möglichen Unterschiede in einer visuell geeigneter Weise graphisch hervorgehoben sind.

20. Einrichtung nach einem oder mehreren der vorangehenden Ansprüche 15 bis 19,
**dadurch gekennzeichnet, dass**
die beiden Vergleichsarten in dem booleschen Gleichungssystem und in den Berichtdateien des Tests der logischen Steuer- und Befehlsprogramme an der virtuellen Anlagen sequentiell ausgeführt werden, wobei das Ergebnis des ersten Vergleiches ein Mittel darstellt, um die Betriebseinheit und/oder den Anlagenbereich und/ die booleschen Gleichungen zu identifizieren, bei der ein Unterschied festgestellt wurde und die dem zweiten Vergleichsschritt unterworfen werden muss.

21. Einrichtung nach Anspruch 20,
**dadurch gekennzeichnet, dass**
der für die Anlagenbedingungen relevante Vergleich, erzielt durch die zwei logischen Steuer- und Befehlsprogramme, zuerst ausgeführt wird und dabei festgestellt wird, bei welchen Teilen des Programms die Vergleichshandlungen in Bezug auf das boolesche Gleichungssystem beschränkt werden können, um mögliche Handlungen erkennen zu können, diese zu korrigieren oder Fehler zu beheben.

22. Einrichtung nach einem oder mehreren der vorangehenden Ansprüche 15 bis 21,
**dadurch gekennzeichnet, dass**
der boolesche Überprüfer auf Basis von Ungleichheit auch logische Programme zum Simulieren der einzelnen Betriebseinheiten und/oder der Anlagenbereiche und/oder der Anlage und/oder der logischen Programme zum Simulieren der Schaltrelais oder des Schaltrelaisnetzwerkes analysiert, wobei sich eine solche Überprüfungsaktion, auf Basis von Ungleichheit, des erzeugten Programms auch auf Programme zum graphischen Darstellen der Betriebseinheiten oder Schaltrelais erstrecken kann.

23. Einrichtung nach einem oder mehreren der vorangehenden Ansprüchen,
**dadurch gekennzeichnet, dass**
die Einrichtung eine Netzwerkschnittstelle aufweist und einen nicht-vitalen Knotenpunkt der Bahnanlage erzeugt und ein Mittel zum schnellen Ändern des logischen Steuer- und Befehlsprogramms und zum virtuellen Validieren des gleichen, beispielsweise im Falle einer strukturellen Änderung der Anlage durch das Entfernen oder Hinzufügen von Anlagenelementen ist.

24. Einrichtung nach Anspruch 23,
**dadurch gekennzeichnet, dass**
die Einrichtung alternativ oder in Verbindung ein diagnostisches oder überwachendes Werkzeug für die korrekte Funktionsweise der realen Bahnhofsanlage ist, indem es als Vergleichswerkzeug zwischen der Statusbedingung, die von der realen Anlage vorausgesetzt wird, und der Statusbedingung, die von der simulierten Anlage angenommen wurde, vorgesehen wird.

25. Einrichtung nach dem Anspruch 23 oder 24,
**dadurch gekennzeichnet, dass**
die Einrichtung eine Einrichtung zum Simulieren von Notfalleingriffen vor deren Anwendung in der realen Anlage ist, wobei es im Falle eines Notfalls möglich ist, mehrere Eingriffs- oder Befehlsmöglichkeiten der Anlage zu simulieren, um an der Anlage selbst aus den möglichen Alternativen diejenige auszuführen, die die beste Lösung ist.

26. Einrichtung nach einem oder mehreren der vorangehenden Ansprüchen,
**dadurch gekennzeichnet, dass**
die Einrichtung Werkzeuge zum Ausführen von Simulierungsfunktionen mit einer Benutzerschnittstelle in der von der Windows © Programm Soft Inc. verwendeten Weise aufweist und dafür im Betrieb befindliche Fenster mit Schaltflächen, Schnellauswahlmenüs und anderen Funktionalitäten, die typisch für die beschriebene Schnittstelle sind, aufweist und zusätzlich offenkundig zu dem Gebrauch einer Maus oder anderer Zeigerdarstellern, Auswahl- und Systemeingabegeräten und der Tastatur zur Eingabe numerischer Daten sowie zum Erstellen oder Ändern der graphischen Darstellung der Betriebseinheiten und/oder der Schaltrelais oder anderer Teile der Anlagenstruktur.

27. Einrichtung nach einem oder mehreren der vorangehenden Ansprüche,
**dadurch gekennzeichnet, dass**
die Einrichtung Mittel zum Einstellen der spezifischen Betriebsbedingungen der Anlage oder von der Regel abweichender Situationen und zum Überprüfen der Reaktionen der Anlage hinsichtlich verschiedener Betriebsumgebungen vorsieht.

28. Einrichtung nach Anspruch 27,
**dadurch gekennzeichnet, dass**
manuelle Einstelleinrichtungen Mittel zum Ausführen der spezifischen Statusbedingungen des logischen Steuer- und Befehlsprogrammes sind, die durch persönliche Eingaben zu Beginn eines Durchlaufes vorgesehen werden, wodurch es möglich ist durch geeignete Planung Bedingungen vorzusehen, bei denen eine oder mehrere Betriebseinheiten nicht oder in einem anormalen Zustand im Betrieb sind.

29. Verfahren zum Überprüfen logischer Software Engines zum Steuern und Anweisen von Anlagen wie Bahnanlagen, insbesondere Bahnhofsanlagen, aufweisend zumindest eine zentrale Recheneinheit und zumindest einen Speicher zum Laden und Ausführen von Programmen, wobei
eine logische Engine zum Befehlen einer Anlage, insbesondere einer Bahnhofsanlage, in dem Speicher zur Ausführung geladen wird oder ladbar ist, wobei die Anlage eine Vielzahl von betätigenden und/oder erkennenden und/oder messtechnischen und/oder signalgebenden Betriebseinheiten, die sogenannte Streckenausrüstung, aufweist, wobei die Einheiten zum Erhalten von Befehlssignalen und zum Übermitteln von Steuersignalen, falls diese die Betriebsbedingungen betreffen, vorgesehen sind, und wobei die logische Software Engine Steuersignale einliest, die von den betätigenden und/oder erkennenden und/oder messtechnischen und/oder signalgebenden Betriebseinheiten gegeben werden und die logische Software Engine Steuersignale der beschriebenen Betriebseinheiten basierend auf einem Handlungsprotokoll des Systems selbst weiterleitet,
**dadurch gekennzeichnet, dass**
in dem Computerspeicher ein Programm zur Softwaresimulation der Anlage, die von dem logischen Steuer- und Befehlsprogramm gesteuert und befohlen werden muss, geladen wird oder ladbar ist und von dem Computer selbst ausgeführt werden kann und welches Simulationsprogramm genau die Anlagenstruktur und die Betriebsarten der Betriebseinheiten, die in der Anlage vorgesehen sind, wiedergibt.

30. Verfahren nach Anspruch 29,
**dadurch gekennzeichnet, dass**
die Simulation der Anlagenstruktur und der damit verbundenen Betriebseinheiten wie Streckenschaltungen, die die Präsenz der Züge erfassen, Weichenstellern, Signalausgabeeinheiten und weiteren diversen Einheiten in dem Simulationsprogramm durch boolesche Algorithmen wiedergegeben wird, wobei Variablen, die mit den Algorithmen verknüpft sind, eindeutig definiert sind, um Steuersignale verschiedener Status- oder der Betriebsbedingungen verschiedener Betriebseinheiten und Umschaltungsbefehlssignale für Status- oder Betriebsbedingungen der verschiedenen Betriebseinheiten und/oder deren Aufrechterhaltung wiederzugeben.

31. Verfahren nach Anspruch 29 oder 30,
**dadurch gekennzeichnet, dass**
die Abbildung des Verhaltens der virtuellen Anlage unter der Steuerung des logischen Steuer- und Befehlsprogramms als Variablenliste dargestellt wird, die eindeutig verschiednen Betriebseinheiten als Berichtsdateien zugeordnet sind, in denen verschiedene Betriebseinheiten und die damit verknüpften Status- und Befehlsvariablen aufgelistet sind.

32. Verfahren nach einem oder mehreren der vorangehenden Ansprüche 29 bis 31,
**dadurch gekennzeichnet, dass**
das Verfahren die Einstellungen durch den Benutzer der Startbetriebsbedingungen der Anlage und/oder auch anormale Einstellungssituationen der Anlagenbetriebseinheiten ermöglicht, um die Reaktion der Anlage auf diese Bedingungen zu überprüfen.

33. Verfahren nach einem oder mehreren der vorangehenden Ansprüche 29 bis 32,
**dadurch gekennzeichnet, dass**
eine virtuelle Abbildung der Betriebseinheit und/oder des Anlagenstrukturelements zu jeder Anlagenbetriebseinheit und/oder zu jedem relevanten Strukturelement eindeutig zugeordnet werden kann, wobei die Abbildung von einem graphischen Programm erzeugt wird, geladen oder ladbar und/oder ausführbar von dem Computer und die virtuelle Abbildung eindeutig zu dem logischen Simulationsprogramm der Betriebseinheit oder des Anlagenstrukturelementes korreliert, wobei das graphische Programm zum Erzeugen der virtuellen Abbildung jeder Betriebseinheit einer solchen Art ist, dass mehrere graphische Darstellungsbedingungen der Betriebseinheit erzeugt werden, wobei jede dieser eindeutig mit einer vorbestimmten Anzahl von Variablen relativ zu der Betriebsbedingung der Betriebseinheit und/oder Umschalt- oder Aufrechterhaltungsbefehlsvariablen des Betriebsstatus der Betriebseinheit selbst korreliert.

34. Verfahren nach Anspruch 33,
**dadurch gekennzeichnet, dass**
der Betrieb des logischen Steuer- und Befehlsprogramms weiterhin, parallel oder alternativ, als Verhalten der entsprechenden Befehlshardwarelogik dargestellt wird, aufgebaut aus einem Schaltrelaisnetzwerk, wobei ein Simulationsprogramm des Schaltrelaisbetriebes und ein Simulationsprogramm des Schaltrelaisnetzwerkbetriebes vorgesehen ist sowie graphische Programme zum Darstellen der Schaltrelais, die eindeutig jedem Schaltrelaissimulierungsprogramm und dem graphischen Darstellungsprogramms des Schaltrelaisnetzwerkes zugeordnet sind.

35. Verfahren nach Anspruch 34,
**dadurch gekennzeichnet, dass**
jedes Schaltrelais von einem logischen Programm boolescher Art simuliert wird, wobei individuelle Statusbedingungen der Schaltrelais und/oder Umschaltbefehle durch Status- oder Befehlsvariablen dargestellt werden und die graphischen Programme so ausgeführt sind, dass mehrere graphische Erscheinungen der Schaltrelais eindeutig mit den Werten, die von den Status- und den Befehlsvariablen vorgegeben werden, verknüpft sind.

36. Verfahren nach einem oder mehreren der vorangehenden Ansprüche,
**dadurch gekennzeichnet, dass**
die Darstellung der Funktionsweise der Anlage auf zweier Arten ausgeführt wird, zum Beispiel in Form einer Berichtsdatei, welche die Werte der Statusvariablen anzeigt, die von den Programmen erzeugt wurden, die von den logischen Simulationsprogrammen der Betriebseinheiten erzeugt wurden und in Gestalt einer graphischen Wiedergabe der Betriebsbedingungen der Betriebseinheiten ermöglicht, die Betriebseinheiten der Anlage und folglich ihre Betriebsarten sowohl auf analytischem Weg als auch auf direktem visuellen Weg der physischen Betriebsbedingung genau zu überprüfen.

37. Verfahren nach einem oder mehreren der vorangehenden Ansprüche,
**dadurch gekennzeichnet, dass**
die Einrichtung Mittel zum Einstellen der spezifischen Betriebsbedingungen der Anlage oder von der Regel abweichender Situationen und zum Überprüfen der Anlage hinsichtlich verschiedener Betriebsumfelder vorsieht.

38. Verfahren nach Anspruch 37,
**dadurch gekennzeichnet, dass**
die Einstellungen durch die persönlichen Eingaben zu Beginn des Durchlaufes des logischen Steuer- und Befehlsprogramms zum Bearbeiten spezifischer Statusbedingungen für die verschiedenen Betriebseinheiten vorgesehen werden können, wodurch es mittels geeigneter Planung auch möglich ist Bedingungen vorzusehen, bei denen eine oder mehrere Betriebseinheiten nicht oder in einem anormalen Zustand im Betrieb sind.

39. Verfahren nach Anspruch 38,
**dadurch gekennzeichnet, dass**
das Verfahren das Planen und Gestalten der Abbildungen und/oder Status- und Befehlsvariablenlisten der virtuellen Betriebseinheiten entsprechend den gewünschten oder korrekten Betriebs- oder Statusbedingungen der Anlage verbunden mit einer vorher festgelegten Betriebssituation ermöglicht und die Ausführung der direkten und visuellen Überprüfung des korrekten Betriebes sowie die Ausführung einer automatischen Überprüfung auf Basis eines Vergleichs der nominalen Darstellung und der nominalen Tabelle oder Liste der im Voraus geplanten gewünschten Status- und Befehlsvariablen mit der Abbildung und den Status- und Befehlsvariablen, die tatsächlich im Betrieb der Steuer- und Befehlslogik in dem virtuellen Bahnhofsanlagenmodell entwickelt wurden, wobei im Falle von Ungleichheit eine Fehlermeldung gesendet wird.

40. Verfahren nach Anspruch 39,
**dadurch gekennzeichnet, dass**
die automatische Überprüfung graphische und/oder analytische Darstellungen der Betriebseinheit oder -einheiten ermöglicht, die eine nicht korrekte Bedingung und die entsprechende Status- oder Befehlsvariable oder -variablen und/oder die graphische und/oder analytische Darstellung der Statusvariablen des simulierten Schaltrelaisnetzwerks angenommen haben.

41. Verfahren nach einem oder mehreren der vorangehenden Ansprüche 9 bis 40,
**dadurch gekennzeichnet, dass**
das Verfahren automatische Werkzeuge vorsieht,
die das logische Steuer- und Befehlsprogramm korrigieren, abhängig von den möglichen Korrekturen, die von dem Benutzer in Bezug auf die Status- oder Befehlsvariablen getroffen werden und manuell beim Vorliegen eines Status- oder Befehlsfehlers einer virtuellen Betriebseinheit oder eines Schaltrelais einer entsprechenden logischen Befehlsschaltung, die von dem virtuellen Modell des Schaltrelaisnetzwerkes gebildet wird, geändert werden.

42. Verfahren nach Anspruch 41,
**dadurch gekennzeichnet, dass**
das Verfahren die Durchführung ändernder Eingriffe ermöglicht sowohl auf alphanumerische Weise, ausgeführt in den Berichtsdateien der Status- oder Befehlsvariablen, oder mit graphischen Eingriffen zum Ändern des Aussehens der Betriebseinheit oder des Schaltrelais entsprechend dem Status der Betriebseinheit oder des Schaltrelais, wobei diese Daten von einem Korrekturprogramm, das die Werte der Status oder Befehlsvariablen analysiert, die manuell zum Korrigieren der Falschen eingegeben wurden, interpretiert werden und das Korrekturprogramm das logische Steuer- und Befehlsprogramm analysiert und die Farbe ändert, um die Betriebseinheit oder das Schaltrelais in den die korrekte Statusbedingung mit der gleichen Betriebsbedingung umzuschalten, bei der das logische Steuer- und Befehlsprogramm vorher den Fehler erzeugt hat.

43. Verfahren nach einem oder mehreren der vorangehenden Ansprüche,
**dadurch gekennzeichnet, dass**
das Verfahren das Einlesen von Bereichen der virtuellen Bahnhofsanlage ermöglicht und die entsprechenden Teile des logischen Steuer- und Befehlsprogrammes typische Anlagenstrukturen aufweist, die sich in verschiedenen Bahnhofsanlagen wiederholen, um beide boolesche Simulationsprogramme und graphische Darstellungsprogramme sowie Teile des logischen Steuer- und Befehlsprogramms in neuen Bahnhofsanlagen, die gleichartige Bahnhofsbereiche aufweisen, zu laden und wieder zu verwenden.

44. Verfahren nach einem oder mehreren der vorangehenden Ansprüche,
**dadurch gekennzeichnet, dass**
das Verfahren eine alternative oder parallele Ausführung einer Überprüfung des logischen Steuer- oder Befehlsprogramms der Testphase, der Anlagensimulation, mittels eines booleschen Überprüfers vorsieht, der mit Diversitätsprinzip ein logisches Steuer- und Befehlsprogramm entwickelt, oder dieses in ihm gespeichert ist, welches nach dem Diversitätsprinzip entwickelt wurde, und der das logische Steuer- und Befehlsprogramm der Testphase, der virtuellen Anlagensimulation, mit dem anhand der Diversitätskriterien erzeugten vergleicht.

45. Verfahren nach Anspruch 44,
**dadurch gekennzeichnet, dass**
das Verfahren ein weiteres Programm zum Erzeugen der Testvorrichtung der logischen Steuer- und Befehlsprogrammen mittels der Anlagensimulation vorsieht, wobei das erzeugte Programm gemäß einem Kode abläuft, unterschiedlich zu dem, mit dem das logische Steuer- und Befehlsprogramm in der Testphase der virtuellen Anlage erzeugt wurde, und die zwei logischen Steuer- und Befehlsprogramme von dem Booleschen Überprüfer verglichen werden, um Unterschiede in den Booleschen Gleichungssystemen zu identifizieren.

46. Verfahren nach Anspruch 45,
**dadurch gekennzeichnet, dass**
das logische Steuer- und Befehlsprogramm, erzeugt von dem Überprüfer oder darin gespeichert, zusätzlich oder alternativ einem Testlauf mittels der virtuellen Anlage unterzogen wird, wobei die von den beiden logischen Steuer- und Befehlsprogrammen erzeugten Ergebnisse verglichen werden.

47. Verfahren nach einem oder mehreren der vorangehenden Ansprüche 44 bis 46,
**dadurch gekennzeichnet, dass**
das Verfahren die Darstellung der Betriebsunterschiede der zwei logischen Steuer- und Befehlsprogramme, die gemäß Diversitätskriterien erzeugt wurden, sowohl in Form von Vergleichstabellen der Variablen als auch in Form von graphischen Vergleichen und/oder der zwei Schaltrelaisnetzwerke entsprechend der zwei Booleschen Gleichungssysteme ermöglicht, wobei sowohl in dem Variablenvergleich als auch in dem graphischen Vergleich jeweils die Variablen und graphischen Zustände hervorgehoben werden, die unterschiedlich bezüglich der anderen sind.

48. Verfahren nach Anspruch 47,
**dadurch gekennzeichnet, dass**
das Verfahren die Überlagerung der graphischen Abbildungen der Anlagenstatusbedingungen, die von den zwei logischen Steuer- und Befehlsprogrammen erzielt wurden, ermöglicht, wobei die möglichen Unterschiede in dieser Überlagerung der Abbildungen der Anlagenstatusbedingungen graphisch hervorgehoben werden.

49. Verfahren nach einem oder mehreren der vorangehenden Ansprüche 44 bis 48,
**dadurch gekennzeichnet, dass**
das Verfahren, alternativ oder abwechselnd, die Durchführung der zwei Verfahren zum Vergleichen der zwei logischen Steuer- und Befehlsprogramme an dem Booleschen Gleichungssystem und an dem Ergebnis des Testdurchlaufes an der simulierten virtuellen Anlage vorsieht, wodurch es zudem möglich wird die Reihenfolge der Abläufe der zwei verschiedenen Vergleichsweisen zu ändern.

50. Verfahren nach Anspruch 49,
**dadurch gekennzeichnet, dass**
das Verfahren folgende Vergleichsschritte vorsieht:
Zunächst Durchführung des Vergleichs in Bezug auf die Anlagenbedingungen, die von den zwei logischen Steuer- und Befehlsprogrammen erzielt wurden;
Basierend auf diesem Vergleich, Identifizierung auf welche Teile des Programms die nachfolgenden Vergleichshandlungen reduziert werden können;
Durchlauf des Vergleichs in Bezug auf die Booleschen Gleichungen der zwei logischen Steuer- und Befehlsprogramme, nur für die Gleichungen, welche die funktionale Ungleichheit verursacht haben, die in dem ersten Vergleichsschritt aufgefunden wurden;
Folglich Ausführung der dafür möglichen Korrekturhandlungen oder Fehlerbehebungssuche (Fehlererkennung) bei diesen Booleschen Gleichungen, die für das abweichende Verhalten der Anlage verantwortlich sind.

51. Verfahren nach einem oder mehreren der vorangehenden Ansprüche 44 bis 50,
**dadurch gekennzeichnet, dass**
die Aktionen für den Vergleich mit einem Programm, das gemäß eines unterschiedlichen Entwicklungskodes entwickelt wurde, auch in Beziehung zu logischen Programmen zum Simulieren der einzelnen Betriebseinheiten und der Anlagenstruktur sowie bei logischen Programmen zum Simulieren der Schaltrelais und des Schaltrelaisnetwerkes und, falls ein solcher Überprüfungsvorgang auch auf die graphischen Wiedergabeprogramme der Betriebseinheiten oder der Schaltrelais ausgedehnt werden könnte, angewendet werden.

52. Verfahren nach einem oder mehreren der vorangehenden Ansprüche 44 bis 51,
**dadurch gekennzeichnet, dass**
das Verfahren parallel Mittel zum Zertifizieren des logischen Steuer- und Befehlsprogramms beinhaltet, die aus einem weiteren unabhängigen Programm bestehen, das parallel die Überprüfung des gleichen Booleschen Gleichungssystems durchführt, welches das logische Steuer- und Befehlsprogramm bildet, um eine doppelte Überprüfung mittels einer Bahnanlagensimulation durchzuführen, wobei das Verhalten der simulierten Anlage, welches unter der Steuerung des logischen Steuer- und Befehlsprogramms in zwei getrennten und parallelen Testüberprüfungen erzielt wird, verglichen wird und Alarm- oder Fehlerdateien im Falle eines Unterschiedes erzeugt werden.

53. Verfahren nach einem oder mehreren der vorangehenden Ansprüche 44 bis 52,
**dadurch gekennzeichnet, dass**
das Verfahren einen Schritt zum Aufbau einer Verbindung zu Einrichtungen oder Fernnetzwerken aufweist, um die Testfunktionen einem Fernarbeitsplatz anzuweisen und/oder um alternative Funktionen auszuführen, wie die Funktionen eines nicht-vitalen Knotenpunktes der Bahnanlage.

54. Verfahren nach Anspruch 53,
**dadurch gekennzeichnet, dass**
das Verfahren für eine Veränderung, um ein logisches Steuer- und Befehlsprogramm zu aktualisieren und für den virtuellen Funktionstest dafür, im Falle einer strukturellen Änderung der Anlage, verwendet wird.

55. Verfahren nach Anspruch 51 bis 54,
**dadurch gekennzeichnet, dass**
das Verfahren zur Überwachung oder Diagnose der korrekten Betriebsweise der realen Bahnhofsanlage verwendet wird, indem ein Vergleich zwischen der Statusbedingung, die von der realen Anlage und die von der simulierten Anlage eingenommen wird, durchführt.

56. Verfahren nach einem oder mehreren der vorangehenden Ansprüche 50 bis 55,
**dadurch gekennzeichnet, dass**
das Verfahren als ein virtueller Notfallssimulator für die Eingriffs- und Befehlsmöglichkeiten der realen Anlage verwendet wird, um an der Anlage selbst nur die Wahlmöglichkeit, die die beste Lösung innerhalb der möglichen Auswahl bietet, zu realisieren.

57. Verfahren nach einem oder mehreren der vorangehenden Ansprüche 50 bis 55,
**dadurch gekennzeichnet, dass**
das Verfahren ein Programm zum Ausführen der Simulationsfunktionen mit einer Benutzerschnittstelle einer Art wie von dem Windows ® Programm der Firma Microsoft Inc. aufweist und daher im Betrieb stehende Fenster mit Schaltflächen, Schnellauswahlmenüs und anderen Funktionen, die typisch für diese Schnittstelle sind, offenkundig zusätzlich des Gebrauchs der Maus oder anderer Zeigereinheiten, Auswahl- und Befehlseingaben und der Tastatur, um numerische, alphanumerische Daten und/oder numerische und alphanumerische Befehle einzugeben, wie auch zum Erzeugen oder Ändern graphischer Abbildungen der Betriebseinheiten und/oder der Schaltrelais oder anderer Teile der Anlagenstruktur, aufweist.

58. Programm für einen Computer, vorgesehen zum Verifizieren eines logischen Programms zum Steuern und Anweisen einer Anlage, insbesondere einer Bahnanlage, durch die Anwendung an einer simulierten Bahnanlage, die vorgesehen ist, um die Verfahrensschritte nach einem oder mehreren der vorangehenden Ansprüche 28 bis 57 auszuführen oder in dem Computer geladen wird, um eine Einrichtung nach einem oder mehreren der vorangehenden Ansprüche 1 bis 29 aufzubauen.

## Revendications

1. Dispositif pour vérifier des moteurs logiciels logiques afin de contrôler et commander des installations, particulièrement des installations ferroviaires, particulièrement des gares, comportant au moins un ordinateur ayant au moins une unité centrale de traitement et au moins une mémoire pour charger et exécuter des programmes :
un moteur logique pour commander une installation, particulièrement une gare, étant chargé ou pouvant être chargé dans ladite mémoire en vue de son exécution, laquelle installation comporte une pluralité d'unités opérationnelles pour l'actionnement et/ou la détection et/ou la mesure et/ou la signalisation de ce que l'on appelle des équipements en bordure de la voie, lesquelles unités sont agencées pour recevoir des signaux de commande et pour transmettre des signaux de contrôle concernant la condition opérationnelle, et lequel moteur logiciel logique lit des signaux de contrôle délivrés par les unités opérationnelles pour l'actionnement et/ou la détection et/ou la mesure et/ou la signalisation et il traite des signaux de commande desdites unités opérationnelles sur la base d'un protocole d'opération de l'installation elle-même,
**caractérisé en ce que**
dans la mémoire de l'ordinateur, un programme de simulation par logiciel de l'installation qui doit être contrôlé et commandé par le programme logique de contrôle et de commande est chargé ou peut être chargé et il est exécutable par l'ordinateur lui-même et lequel programme de simulation reproduit exactement la structure de l'installation et les modes opérationnels des unités opérationnelles agencées dans ladite installation.

2. Dispositif selon la revendication 1, **caractérisé en ce que** la simulation de la structure d'installation et des unités opérationnelles associées à celle-ci, telles que des circuits de voies pour détecter la présence du train, des actionneurs d'aiguille, des actionneurs de signalisation et d'autres unités différentes est représentée dans le programme de simulation par des algorithmes Booléens, des variables associées auxdits algorithmes étant définies de manière univoque pour représenter les signaux de contrôle de diverses conditions d'état ou d'opération de plusieurs unités opérationnelles et les signaux de commande pour commuter et/ou conserver les conditions d'état ou opérationnelles desdites plusieurs unités opérationnelles.

3. Dispositif selon la revendication 1 ou 2, **caractérisé en ce que** des moyens pour afficher l'image de comportement d'installation sont fournis sous le contrôle du programme logique de contrôle et de commande en tant que listes de variables, associées de manière univoque à plusieurs unités opérationnelles en tant que fichiers de rapports dans lesquels plusieurs unités opérationnelles et les variables d'état ou de commande associées sont listées.

4. Dispositif selon une ou plusieurs des revendications précédentes, **caractérisé en ce que** le programme de simulation comporte des moyens pour établir des conditions opérationnelles de lancement de l'installation et/ou même des situations d'établissement anormales d'unités opérationnelles d'installation pour vérifier la réaction de l'installation à ces conditions.

5. Dispositif selon l'une ou plusieurs des revendications précédentes, **caractérisé en ce qu'**à chaque unité opérationnelle d'installation et/ou à chaque élément structurel important et/ou au moins à une ou plusieurs zones de l'installation et/ou à l'installation entière peut être associé de manière univoque une image virtuelle de l'unité opérationnelle et/ou de l'élément structurel d'installation et/ou de la zone ou des zones de l'installation et/ou de l'installation entière dont l'image est générée par un programme graphique chargé ou pouvant être chargé et/ou exécutable par l'ordinateur du dispositif et dont l'image virtuelle est corrélée de manière univoque au programme logique pour simuler l'unité opérationnelle ou l'élément structurel d'installation ou la zone ou les zones de l'installation ou de l'installation entière, le programme graphique pour générer l'image virtuelle de chaque unité opérationnelle et/ou de chaque zone et/ou de l'installation étant conçu pour générer plusieurs conditions d'aspect graphique de l'unité opérationnelle, de la zone ou de l'installation entière, chacune d'elles étant corrélée de manière univoque à une valeur prédéterminée de variables appropriées à la condition opérationnelle de l'unité opérationnelle ou de la zone ou de l'installation et/ou de variables de commande pour commuter ou conserver l'état opérationnel de l'unité opérationnelle ou de la zone ou de l'installation.

6. Dispositif selon une ou plusieurs des revendications précédentes, **caractérisé en ce que** le fonctionnement du programme logique de contrôle et de commande est en outre représenté, en parallèle ou en variante, en tant que comportement de la logique matérielle de commande équivalente constituée d'un réseau relais, un programme pour simuler une opération relais et un programme pour simuler une opération de réseau relais étant fournis, ainsi que des programmes graphiques pour représenter des relais associés de manière univoque à chaque programme de simulation relais et pour relayer un programme de représentation graphique de réseau.

7. Dispositif selon la revendication 6, **caractérisé en ce que** chaque relais est simulé par un programme logique de type Booléen, des conditions d'état uniques de relais et/ou des commandes de commutation étant représentées par des variables d'état ou de commande et des programmes graphiques étant conçus pour associer plusieurs aspects graphiques relais de manière univoque corrélés à des valeurs adoptées par lesdites variables d'état ou de commande.

8. Dispositif selon une ou plusieurs des revendications précédentes, **caractérisé en ce qu'**il a des moyens pour programmer et configurer des images et/ou des listes de variables de commande et d'état d'unités opérationnelles virtuelles correspondant à l'opération voulue ou correcte ou la condition d'état de l'installation en association avec une situation d'opération prédéterminée, en fournissant des moyens pour contrôler, directement et visuellement, une opération correcte en association avec des moyens de contrôle automatique sur la base de la comparaison entre l'image nominale et la table ou la liste nominale des variables d'état et de commande voulues précédemment programmées et l'image et les variables d'état et de commande réellement traitées pendant l'opération de la logique de contrôle et de commande avec le modèle virtuel de gare, un message d'erreur étant envoyé en cas de non-identité.

9. Dispositif selon la revendication 8, **caractérisé en ce qu'**il a des moyens pour afficher graphiquement et/ou de manière analytique l'unité ou les unités opérationnelles qui ont adopté une condition non-correcte et l'état correspondant ou la variable ou les variables de commande.

10. Dispositif selon les revendications 8 ou 9, **caractérisé en ce que** les moyens de vérification automatique analysent même les moyens de représentation simulée du réseau relais, indiquant le ou les relais n'ayant pas été commutés dans la condition correcte et les variables d'état ou de commande de commutation correspondantes.

11. Dispositif selon une ou plusieurs des revendications précédentes, **caractérisé en ce qu'**il fournit des moyens automatiques qui corrigent le programme logique de contrôle et de commande sur la base des corrections possibles apportées par l'utilisateur à des variables d'état ou de commande manuellement modifiées en présence d'une erreur d'état ou de commande d'une unité opérationnelle virtuelle ou d'un relais dans le circuit logique de commande correspondant formé par l'installation ou le modèle virtuel relais de réseau.

12. Dispositif selon une ou plusieurs des revendications précédentes, **caractérisé en ce que** les moyens de modification permettent des interventions de modification à la fois de type alphanumérique exécutées sur des fichiers de rapport de variables d'état ou de commande, et des interventions pour modifier graphiquement l'aspect de l'unité opérationnelle ou du relais correspondant à l'état de ladite unité opérationnelle ou dudit relais, alors que des moyens d'analyse et d'interprétation sont fournis, lesquels analysent les valeurs de variables d'état ou de commande manuellement établies pour corriger les valeurs erronées, analysent le programme logique de contrôle et de commande et modifient le code pour commuter l'unité opérationnelle ou le relais dans la condition d'état correcte lorsque la condition d'opération survient avec laquelle le programme logique de contrôle et de commande a précédemment généré l'erreur.

13. Dispositif selon une ou plusieurs des revendications précédentes, **caractérisé en ce qu'**il comporte des moyens pour associer des unités opérationnelles et des éléments structurels d'installation pour générer ou pour trouver des zones de gare virtuelle et les parties correspondantes du programme logique de contrôle et de commande ayant des structures d'installation typiques qui se retrouvent dans plusieurs gares, de manière à charger et à réutiliser à la fois les programmes de simulation Booléens, et des programmes d'affichage graphique ainsi que des parties de programmes logiques de contrôle et de commande dans des nouvelles gares ayant des zones de gare égales.

14. Dispositif selon une ou plusieurs des revendications précédentes, **caractérisé en ce qu'**il a des moyens pour connecter des moyens de certification et de validation et assurer l'interface avec ceux-ci sur la base de la diversité du programme pour générer le programme logique de contrôle et de commande, tel que ce qu'on appelle un vérificateur d'algorithme Booléen.

15. Dispositif selon la revendication 14, **caractérisé en ce que** le vérificateur Booléen comporte un programme supplémentaire pour générer le programme logique de contrôle et de commande généré ou mémorisé dans le vérificateur Booléen dont le programme logique de contrôle et de commande supplémentaire est généré à travers des moyens différents de ceux pendant l'étape de test par l'intermédiaire d'une simulation d'installation et des moyens pour comparer le programme logique de contrôle et de commande supplémentaire généré ou mémorisé dans le vérificateur Booléen au programme logique de contrôle et de commande pendant l'étape de test par l'intermédiaire d'une simulation d'installation pour notifier l'identité entre les deux programmes logiques de contrôle et de commande.

16. Dispositif selon la revendication 15, **caractérisé en ce que** la comparaison survient dans le système d'équations Booléennes du programme logique de contrôle et de commande généré ou mémorisé dans le vérificateur Booléen et dans le programme logique de contrôle et de commande pendant l'étape de test par l'intermédiaire de la simulation de l'installation.

17. Dispositif selon les revendications 15 ou 19, **caractérisé en ce que** la comparaison survient conformément à des rapports de texte par l'intermédiaire d'une simulation d'installation du programme logique de contrôle et de commande pendant l'étape de test et du programme logique de contrôle et de commande supplémentaire généré et/ou mémorisé dans les moyens de vérificateur Booléen étant des moyens fournis pour comparer des variables de commande et d'état d'unités opérationnelles et des relais du réseau relais virtuel à la fois du point de vue numérique et du point de vue graphique.

18. Dispositif selon la revendication 17, **caractérisé en ce qu'**il comporte des moyens pour afficher, d'une manière combinée, des images graphiques de conditions d'état d'installation obtenues à l'aide de deux programmes logiques de contrôle et de commande.

19. Dispositif selon la revendication 18, **caractérisé en ce qu'**il comporte des moyens pour afficher, d'une manière par superposition, des images de disposition d'installation conformément aux deux programmes logiques de contrôle et de commande, dans lesquels lors de la superposition de l'image de condition d'état d'installation les différences possibles sont graphiquement mises en relief d'une manière appropriée visuellement.

20. Dispositif selon une ou plusieurs des revendications précédentes 15 à 19, **caractérisé en ce que** les deux modes de comparaison dans le système d'équations Booléennes et dans les fichiers de rapport du test de programmes logiques de contrôle et de commande avec l'installation virtuelle sont exécutés séquentiellement, le résultat de la première comparaison étant des moyens pour identifier l'unité opérationnelle et/ou la zone d'installation et/ou les équations Booléennes dans lesquelles une différence a été notée et devant être soumise à la deuxième étape de comparaison.

21. Dispositif selon la revendication 20, **caractérisé en ce que** la comparaison appropriée aux conditions d'installation obtenues par les deux programmes logiques de contrôle et de commande est tout d'abord exécutée et, par conséquent, il est identifié sur quelles parties du programme les actions de comparaison peuvent être limitées eu égard au système d'équations Booléennes pour déterminer des actions possibles afin de corriger celui-ci ou le débogage.

22. Dispositif selon une ou plusieurs des revendications précédentes 15 à 21, **caractérisé en ce que** le vérificateur Booléen analyse, sur la base de la diversité, même des programmes logiques pour simuler les unités opérationnelles uniques, et/ou les zones d'installation et/ou l'installation et/ou les programmes logiques pour simuler des relais ou un réseau relais étendant une telle action de vérification, sur la base de la diversité, du programme de génération même dans des programmes destinés à représenter graphiquement des unités opérationnelles ou des relais.

23. Dispositif selon une ou plusieurs des revendications précédentes, **caractérisé en ce qu'**il comporte une interface réseau et il peut constituer un noeud non-vital de l'installation ferroviaire, étant des moyens pour modifier rapidement le programme logique de contrôle et de commande et pour valider virtuellement celui-ci, par exemple dans le cas d'une modification structurelle de l'installation en éliminant ou en ajoutant des éléments de l'installation.

24. Dispositif selon la revendication 23, **caractérisé en ce que** ledit dispositif, en variante ou en association, est un outil de diagnostic ou de supervision du fonctionnement correct de la gare réelle, un comparateur étant agencé entre la condition d'état qui a été adoptée par l'installation réelle et celle qui a été adoptée par l'installation simulée.

25. Dispositif selon les revendications 23 ou 24, **caractérisé en ce qu'**il s'agit d'un dispositif pour simuler des interventions d'urgence avant leur application à l'installation réelle, dans l'événement d'urgence étant possible pour simuler plusieurs possibilités d'intervention ou de commande de l'installation pour exécuter sur l'installation elle-même parmi les choix possibles celui qui est la meilleure solution.

26. Dispositif selon une ou plusieurs des revendications précédentes, **caractérisé en ce qu'**il comporte des outils pour exécuter des fonctions de simulation avec une interface utilisateur du type utilisé par le programme Windows (nom commercial déposé) de Microsoft Inc. et, par conséquent, il comporte des fenêtres opérationnelles ayant des boutons de fonction, des menus de choix rapides et d'autres fonctionnalités typiques de ladite interface, en plus évidemment de l'utilisation de la souris ou d'autres pointeurs, de systèmes de sélection et d'entrée de commande et le clavier pour entrer des données numériques, de manière à créer ou modifier des images graphiques d'unités opérationnelles et/ou de relais ou d'autres parties de la structure de l'installation.

27. Dispositif selon une ou plusieurs des revendications précédentes, **caractérisé en ce qu'**il fournit des moyens pour établir des conditions opérationnelles spécifiques de l'installation ou de situations anormales et pour vérifier les réactions de l'installation en se reportant à plusieurs environnements opérationnels.

28. Dispositif selon la revendication 27, **caractérisé en ce que** des moyens d'établissement manuellement sont des moyens fournis par le personnel imposant au démarrage du cycle d'exécuter des conditions d'état spécifiques au programme logique de contrôle et de commande dans les diverses unités opérationnelles, étant possible de fournir par l'intermédiaire d'une planification appropriée des conditions égales dans lesquelles une ou plusieurs unités opérationnelles ne fonctionnent pas ou fonctionnent d'une manière anormale.

29. Procédé pour vérifier des moteurs logiciels logiques afin de contrôler et de commander des installations telles que des installations ferroviaires, particulièrement des gares, comportant au moins une unité centrale de traitement au moins une mémoire pour charger et exécuter des programmes :
un moteur logique pour commander une installation, particulièrement une gare, étant chargé ou pouvant être chargé dans ladite mémoire en vue de son exécution, laquelle installation comporte une pluralité d'unités opérationnelles d'actionnement et/ou de détection et/ou de mesure et/ou de signalisation, ce que l'on appelle des équipements en bordure de voie, lesquelles unités sont agencées pour recevoir des signaux de commande et transmettre des signaux de commande concernant la condition opérationnelle, et lequel moteur logiciel logique lit des signaux de contrôle délivrés par les unités opérationnelles d'actionnement et/ou de détection et/ou de mesure et/ou de signalisation et il traite des signaux de commande desdites unités opérationnelles sur la base d'un protocole d'opération du système lui-même,
**caractérisé en ce que**
dans la mémoire de l'ordinateur, un programme pour simuler par logiciel l'installation qui doit être contrôlé et commandé par le programme logique de contrôle et de commande est chargé ou peut être chargé et il peut être exécuté par l'ordinateur lui-même et lequel programme de simulation reproduit exactement la structure de l'installation et les modes opérationnels des unités opérationnelles agencées dans ladite installation.

30. Procédé selon la revendication 29, **caractérisé en ce que** la simulation de la structure d'installation et des unités opérationnelles associées à celle-ci, telles que des circuits de voies pour noter la présence du train, des actionneurs d'aiguille, des actionneurs de signalisation et d'autres unités différentes est représentée dans le programme de simulation par des algorithmes Booléens, des variables associées auxdits algorithmes étant définies de manière univoque pour représenter les signaux de contrôle de plusieurs conditions d'état ou d'opération de plusieurs unités opérationnelles et signaux de commande de commutation de conditions d'état ou d'opération desdites diverses unités opérationnelles et/ou la maintenance de celles-ci.

31. Procédé selon la revendication 29 ou 30, **caractérisé en ce que** l'image du comportement de l'installation virtuelle sous le contrôle du programme logique de contrôle et de commande est affichée sous forme d'une liste de variables associée de manière univoque à plusieurs unités opérationnelles en tant que fichiers de rapports, plusieurs unités opérationnelles et variables d'état ou de commande associées étant listées.

32. Procédé selon une ou plusieurs des revendications précédentes 29 à 31, **caractérisé en ce qu'**il fournit l'établissement par l'utilisateur de conditions opérationnelles de lancement de l'installation et/ou même des situations d'établissement anormales d'unités opérationnelles d'installation pour vérifier la réaction de l'installation à ces conditions.

33. Procédé selon une ou plusieurs des revendications précédentes 29 à 32, **caractérisé en ce qu'**une image virtuelle de l'unité opérationnelle et/ou de l'élément structurel de l'installation peut être associée de manière univoque à chaque unité opérationnelle d'installation et/ou à chaque élément structurel approprié dont l'image est générée par un programme graphique chargé ou pouvant être chargé et/ou exécutable par l'ordinateur et dont l'image virtuelle est corrélée de manière univoque au programme logique de simulation de l'unité opérationnelle ou de l'élément structurel d'installation du programme graphique pour générer l'image virtuelle de chaque unité opérationnelle étant conçue pour générer plusieurs conditions d'aspects graphiques de l'unité opérationnelle, chacune d'elles est corrélée de manière univoque à une valeur prédéterminée de variables relatives à la condition opérationnelle de l'unité opérationnelle et/ou des variables de commande de commutation ou de maintenance de l'état opérationnel de l'unité opérationnelle elle-même.

34. Procédé selon la revendication 33, **caractérisé en ce que** le fonctionnement du programme logique de contrôle et de commande est en outre représenté en parallèle ou en variante en tant que comportement de l'unité logique matérielle de commande équivalente constituée d'un réseau relais, un programme de simulation d'opération relais et un programme de simulation une opération d'opération de réseau relais étant fournis, ainsi que des programmes graphiques pour représenter des relais associés de manière univoque à chaque programme de simulation relais et un programme de représentation graphique de réseau relais.

35. Procédé selon la revendication 34, **caractérisé en ce que** chaque relais est simulé par un programme logique de type Booléen, des conditions d'état individuelles de relais et/ou des commandes de commutation étant représentées par des variables d'état ou de commande et des programmes graphiques étant destinées à associer plusieurs aspects graphiques de relais corrélés de manière univoque à des valeurs adoptées par lesdites variables d'état ou de commande.

36. Procédé selon une ou plusieurs des revendications précédentes, **caractérisé en ce que** l'affichage du comportement fonctionnel de l'installation est exécuté conformément à deux modes et, à savoir, sous la forme de fichier de rapports qui affiche des valeurs de variables d'état générées par les programmes traités par les programmes logiques de simulation d'unités opérationnelles et sous la forme de représentation graphique de la condition opérationnelle d'unités opérationnelles permettant de vérifier en détail les unités opérationnelles de l'installation et, par conséquent, les modes opérationnels de celles-ci à la fois d'une manière analytique et d'une manière visuelle directe de la condition de fonctionnement physique.

37. Procédé selon une ou plusieurs des revendications précédentes, **caractérisé en ce qu'**il fournit des moyens pour établir des conditions opérationnelles spécifiques de l'installation ou de situations anormales et pour vérifier les réactions de l'installation en se reportant à plusieurs environnements opérationnels.

38. Procédé selon la revendication 37, **caractérisé en ce que** ces paramétrages peuvent être exécutés par le personnel imposant au démarrage du cycle d'exécuter des conditions d'état spécifiques au programme logique de contrôle et de commande dans les diverses unités opérationnelles, étant possible de fournir par l'intermédiaire d'une planification appropriée des conditions égales dans lesquelles une ou plusieurs unités opérationnelles ne fonctionnent pas ou fonctionnent d'une manière anormale.

39. Procédé selon la revendication 37, **caractérisé en ce qu'**il fournit la planification et la configuration d'images et/ou de variables d'état et de commande d'unités opérationnelles virtuelles correspondant à la condition d'opération ou d'état voulue ou correcte de l'installation en association avec une situation prédéterminée d'opération et l'exécution de la vérification directe et visuelle de l'opération correcte ainsi que l'exécution d'une vérification automatique basée sur la comparaison entre l'image nominale et la table ou la liste nominale de variables d'état et de commande voulues précédemment planifiées et l'image et les variables d'état et de commande réellement traitées pendant l'opération de l'unité logique de contrôle et de commande avec le modèle virtuel de gare, un message d'erreur étant envoyé en cas de non-identité.

40. Procédé selon la revendication 39, **caractérisé en ce que** le contrôle automatique fournit un affichage graphique et/ou un analytique de l'unité opérationnelle qui a adopté une condition non-correcte et l'état correspondant ou la variable de commande ou plusieurs variables et/ou un affichage graphique et/ou un affichage analytique de variables d'état du réseau relais simulé.

41. Procédé selon une ou plusieurs des revendications précédentes 9 à 40, **caractérisé en ce qu'**il fournit des outils automatiques corrigeant le programme logique de contrôle et de commande en fonction des corrections possibles apportées par l'utilisateur à des variables d'état ou de commande manuellement modifiées en présence d'une erreur d'état ou de commande d'une unité opérationnelle virtuelle ou d'un relais dans le circuit logique de commande correspondant constitué par le modèle virtuel de réseau relais.

42. Procédé selon la revendication 41, **caractérisé en ce qu'**il fournit l'exécution d'interventions de modification à la fois de type alphanumérique exécutées sur des fichiers de rapport de variables d'état ou de commande, ou des interventions graphiques pour modifier l'aspect de l'unité opérationnelle ou du relais correspondant à l'état de ladite unité opérationnelle dudit relais, lesdites données étant interprétées par un programme de correction qui analyse des valeurs de variables d'état ou de commande manuellement définies pour corriger celles qui sont erronées, et qui analyse le programme logique de contrôle et de commande et modifie la couleur pour changer l'unité opérationnelle ou le relais dans la condition d'état correcte avec la même condition d'opération en présence de laquelle le programme logique de contrôle et de commande a précédemment généré l'erreur.

43. Procédé selon une ou plusieurs des revendications précédentes, **caractérisé en ce qu'**il fournit la lecture de zones de la gare virtuelle et des parties correspondantes du programme logique de contrôle et de commande ayant des structures d'installation typiques qui se retrouvent dans plusieurs gares, pour charger et réutiliser à la fois les programmes de simulation Booléens, et des programmes d'affichage graphique ainsi que des parties du programme logique de contrôle et de commande dans de nouvelles gares ayant des zones de gare égales.

44. Procédé selon une ou plusieurs des revendications précédentes, **caractérisé en ce qu'**il fournit l'exécution alternative ou parallèle d'un contrôle du programme logique de contrôle et de commande pendant l'étape de test avec le simulateur d'installation par l'intermédiaire d'un vérificateur Booléen qui génère des principes de diversité, ou dans lequel est mémorisé, un programme logique de contrôle et de commande généré à l'aide de principes de diversité et qui compare le programme logique de contrôle et de commande pendant l'étape de test par l'intermédiaire d'une simulation d'installation virtuelle à celle générée à l'aide de critères de diversité.

45. Procédé selon la revendication 44, **caractérisé en ce qu'**il fournit un programme supplémentaire pour générer l'objet de programme logique de contrôle et de commande de test par l'intermédiaire d'une simulation d'installation, lequel programme de génération fonctionne conformément à un code différent de celui avec lequel a été généré le programme logique de contrôle et de commande pendant le test par l'intermédiaire de l'installation virtuelle, les deux programmes logiques de contrôle et de commande étant comparés par le vérificateur Booléen pour identifier la différence dans le système d'équations Booléennes.

46. Procédé selon la revendication 44, **caractérisé en ce qu'**en plus le programme logique de contrôle et de commande généré ou de manière alternative par le vérificateur ou mémorisé dans celui-ci est soumis à une étape de test par l'intermédiaire d'une installation virtuelle, en comparant les résultats obtenus par les deux programmes logiques de contrôle et de commande.

47. Procédé selon une ou plusieurs des revendications 44 à 46, **caractérisé en ce qu'**il fournit l'affichage, à la fois sous la forme de tableaux comparatifs de variables et sous la forme de comparaisons graphiques, des différences de fonctionnement des deux programmes logiques de contrôle et de commande générés conformément aux critères de diversité et/ou des deux réseaux relais correspondant aux deux systèmes d'équations Booléennes, les variables et les états graphiques respectivement qui sont différents des autres à la fois dans la comparaison de variables et dans la comparaison graphique étant clairement identifiés.

48. Procédé selon la revendication 47, **caractérisé en ce qu'**il fournit la superposition d'images graphiques des conditions d'état d'installation obtenues par les deux programmes logiques de contrôle et de commande, en mettant graphiquement en évidence les différences possibles de cette superposition de l'image de la condition d'état d'installation.

49. Procédé selon une ou plusieurs des revendications 44 à 48, **caractérisé en ce qu'**il fournit l'exécution en variante ou tour à tour des deux modes pour comparer les deux programmes logiques de contrôle et de commande au niveau du système d'équations Booléennes et au niveau du résultat de l'exécution de test sur l'installation virtuelle simulée, la modification de l'ordre de séquence des deux modes de comparaison différents étant également possible.

50. Procédé selon la revendication 49, **caractérisé en ce qu'**il fournit les étapes de comparaison suivantes consistant à :
Tout d'abord, exécuter la comparaison en relation avec les conditions d'installation obtenues par les deux programmes logiques de contrôle et de commande,
sur la base de ladite comparaison identifiant sur quelles parties du programme les actions de comparaison suivantes peuvent être limitées,
exécuter la comparaison en relation avec les équations Booléennes des deux programmes logiques de contrôle et de commande uniquement pour les équations qui ont provoqué les divergences fonctionnelles qui ont été détectées lors de la première étape de comparaison,
par conséquent, exécuter les actions de corrections possibles correspondantes ou les demandes de débogage (détection d'erreur) sur lesdites équations Booléennes identifiées en tant que responsable du comportement différent de l'installation.

51. Procédé selon une ou plusieurs des revendications précédentes 44 à 50, **caractérisé en ce que** les actions pour la comparaison à un programme généré conformément à un code de génération différent sont exécutées également en relation à des programme logiques pour simuler les unités opérationnelles individuelles et la structure d'installation ainsi que dans des programmes logiques pour simuler des relais et un réseau relais et dans le cas où cette action de contrôle peut également être étendue aux programmes de représentation graphique des unités opérationnelles ou des relais.

52. Procédé selon une ou plusieurs des revendications précédentes 44 à 51, **caractérisé en ce qu'**il comporte des moyens parallèles pour certifier le programme logique de contrôle et de commande constitué dans un programme indépendant qui exécute en parallèle le test du même système d'équations Booléennes constituant le programme logique de contrôle et de commande pour exécuter un double test par l'intermédiaire de la simulation d'installation ferroviaire, le comportement de l'installation simulée obtenue sous la commande du programme logique de contrôle et de commande dans les deux tests de contrôle séparés et parallèles étant comparé et des fichiers d'alerte ou d'erreur étant générés dans le cas d'une différence.

53. Procédé selon une ou plusieurs des revendications précédentes 44 à 52, **caractérisé en ce qu'**il comporte une étape pour effectuer une connexion à des dispositifs ou des réseaux distants pour commander les fonctions de test à partir d'une station de travail distante et/ou pour exécuter des fonctions alternatives en tant que fonctions de noeud non-vital d'installation ferroviaire.

54. Procédé selon la revendication 53, **caractérisé en ce qu'**il est utilisé pour une modification afin de mettre à jour un programme logique de contrôle et de commande et pour le test fonctionnel virtuel de celui-ci en cas de modification structurelle de l'installation.

55. Procédé selon les revendications 51 à 54, **caractérisé en ce qu'**il est utilisé pour la supervision ou le diagnostic de l'opération correcte de la gare réelle, en exécutant une comparaison entre la condition d'état adoptée par l'installation réelle et celle adoptée par l'installation simulée.

56. Procédé selon une ou plusieurs des revendications précédentes 50 à 55, **caractérisé en ce qu'**il est utilisé en tant que simulateur d'urgence virtuel pour une possibilité d'intervention ou de commande de l'installation réelle afin de réaliser sur l'installation elle-même uniquement le choix qui offre la meilleure solution parmi les choix possibles.

57. Procédé selon une ou plusieurs des revendications précédentes 29 à 55, **caractérisé en ce qu'**il comporte un programme pour exécuter des fonctions de simulation avec une interface utilisateur du type utilisé par un programme Windows (nom commercial déposé) de Microsoft Inc. et ainsi comportant des fenêtres opérationnelles ayant des boutons de fonction, des menus de choix rapides et d'autres fonctionnalités typiques de ladite interface, en plus évidemment de l'utilisation de la souris ou d'autres moyens de pointage, la sélection et l'entrée de commande et le clavier pour entrer des données numériques, alphanumériques, et/ou des commandes numériques ou alphanumériques, telles qu'également pour créer ou modifier des images graphiques d'unités opérationnelles et/ou de relais ou d'autres parties de la structure d'installation.

58. Programme pour un ordinateur fourni pour vérifier un programme logique afin de contrôler et de commander une installation, particulièrement une installation ferroviaire par l'intermédiaire de l'application sur une installation ferroviaire simulée qui est fournie pour exécuter les étapes du procédé conformément à une ou plusieurs des revendications précédentes 29 à 57 ou à charger dans l'ordinateur pour former un dispositif conformément à une ou plusieurs des revendications précédentes 1 à 28.
